(19) Europäisches Patentamt
European Patent Office
Office européen des brevets

(11) **EP 4 412 338 A1**

(12) **EUROPEAN PATENT APPLICATION**
published in accordance with Art. 153(4) EPC

(43) Date of publication:
**07.08.2024 Bulletin 2024/32**

(21) Application number: **22872065.2**

(22) Date of filing: **22.09.2022**

(51) International Patent Classification (IPC):
***H04W 72/02*** (2009.01)

(52) Cooperative Patent Classification (CPC):
**H04L 5/00; H04W 4/06; H04W 52/14; H04W 52/18; H04W 52/32; H04W 72/02**

(86) International application number:
**PCT/CN2022/120575**

(87) International publication number:
**WO 2023/046021 (30.03.2023 Gazette 2023/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.09.2021 CN 202111138643**

(71) Applicant: **Datang Mobile Communications Equipment Co., Ltd.**
**Beijing 100085 (CN)**

(72) Inventor: **WANG, Junwei**
**Beijing 100085 (CN)**

(74) Representative: **Studio Torta S.p.A.**
**Via Viotti, 9**
**10121 Torino (IT)**

(54) **POWER CONTROL PARAMETER DETERMINING METHOD AND DEVICE**

(57) The present disclosure provides a power control parameter determining method and device. The method includes: obtaining, by a user equipment (UE), related parameters of unicast and related parameters of multicast; and determining, by the UE, a power control parameter of physical uplink control channel (PUCCH) according to the related parameters of the unicast and the related parameters of the multicast.

```
┌─────────────────────────────────────────────────┐
│ obtaining, by UE, related parameters of unicast  │  ── 21
│   and related parameters of multicast            │
└─────────────────────────────────────────────────┘
                         │
                         ▼
┌─────────────────────────────────────────────────┐
│ determining, by the UE, a power control          │  ── 22
│ parameter of PUCCH according to the related      │
│ parameters of the unicast and the related        │
│ parameters of the multicast                      │
└─────────────────────────────────────────────────┘
```

FIG. 2

**Description**

**CROSS-REFERENCE TO RELATED APPLICATION**

The present disclosure claims the priority of Chinese Application No. 202111138643.9, filed on September 27, 2021, the disclosure of which is incorporated in its entirety by reference herein.

**TECHNICAL FIELD**

The present disclosure relates to the field of communication technologies, and in particular to a power control parameter determining method and device.

**BACKGROUND**

Physical Uplink Control Channel (PUCCH) is used to carry Uplink Control Information (UCI) and control a transmission power of the PUCCH. When the UCI includes feedback information of Hybrid automatic repeat request acknowledgment (HARQ-ACK), it is necessary to calculate a power control parameter for feeding back the HARQ-ACK, and the parameter is used for the transmission power of the PUCCH. When a bit number of UCI is greater than 11 bits, the power control parameter is calculated according to a length of a HARQ-ACK codebook. When a bit number of UCI is less than or equal to 11 bits, it is necessary to calculate the power control parameter according to a schedule downlink control information (DCI) received by a terminal.

In related art, when a User Equipment (UE) receives multiple broadcast and multicast services, a base station configures for the UE, multiple UE-based Radio Network Temporary Identifiers (G-RNTIs) for identifying different broadcast and multicast services. For generation of Type-2 codebook, Downlink Assignment index (DAI) are counted for different broadcast and multicast services, respectively, and respective HARQ sub-codebooks are generated for different broadcast and multicast services, which will cause the UE to generate multiple HARQ-ACK sub-codebooks for broadcast-multicast and transmit them on the PUCCH. However, a calculation method of HARQ-ACK sub-codebook of unicast transport blocks in the related art cannot be applied to power control parameters of multicast PUCCH.

**SUMMARY**

An object of the present disclosure is to provide a power control parameter determining method and device, which solves the problem that the existing calculation method of HARQ-ACK sub-codebook of unicast transport blocks cannot be applied to power control parameters of multicast PUCCH.

Embodiments of the present disclosure provide a power control parameter determining method, including:

obtaining, by a user equipment (UE), related parameters of unicast and related parameters of multicast; and
determining, by the UE, a power control parameter of physical uplink control channel (PUCCH) according to the related parameters of the unicast and the related parameters of the multicast.

Optionally, the related parameters of the multicast include at least one of the following:

a downlink assignment index (DAI) parameter of a last downlink control information (DCI) in DCIs of the multicast;
the number of DCIs of the multicast received by the UE;
the number of transport blocks of the multicast received by the UE;
the number of semi-persistently scheduled transport blocks of the multicast received by the UE.

Optionally, the determining, by the UE, a power control parameter of physical uplink control channel (PUCCH) according to the related parameters of the unicast and the related parameters of the multicast, includes:

determining a first power control parameter of a unicast service according to the related parameters of the unicast;
determining a second power control parameter of N multicast services, according to the related parameters of the multicast; wherein N is an integer greater than or equal to 1;
determining the power control parameter of the PUCCH according to the first power parameter and the second power parameter.

Optionally, the determining the power control parameter of the PUCCH according to the first power parameter and the second power parameter, includes:

obtaining a sum of the first power control parameter and the N second power control parameters to obtain the power control parameter of the PUCCH, which is expressed with the following formula:

$$n_{HARQ\text{-}ACK,TB} = n_{HARQ\text{-}ACK,TB(unicast)} + \sum_{i=0}^{N-1} n_{HARQ\text{-}ACK,TB(G\text{-}RNTI(i))}$$

wherein $n_{HARQ\text{-}ACK,TB}$ represents the power control parameter of the PUCCH; $n_{HARQ\text{-}ACK,TB(unicast)}$ represents the first power parameter of the unicast service; $n_{HARQ\text{-}ACK,TB(G\text{-}RNTI(i))}$ represents a second power parameter of a multicast service (i); N represents the total number of multicast services.

Optionally, the second power control parameter $n_{HARQ\text{-}ACK,TB\ (G\text{-}RNTI(i))}$ is equal to a bit number of HARQ-ACK sub-codebook of the multicast service (i) fed back by the UE corresponding to the multicast service (i) on a PUCCH.
Optionally, the second power control parameter is calculated with the following formula:

$$n_{HARQ\text{-}ACK,TB\ (G\text{-}RNTI(i))}$$

$$= \left( \left( V_{DAI,m_{last(i)}}^{DL} - \sum_{c=0}^{N_{cells}^{DL}-1} U_{DAI,c(i)} \right) mod(T_D) \right) N_{TB,max}^{DL}$$

$$+ \sum_{c=0}^{N_{cells}^{DL}-1} \left( \sum_{m=0}^{M-1} N_{m,c(i)}^{received} + N_{SPS,c(i)} \right)$$

wherein $n_{HARQ\text{-}ACK,TB\ (G\text{-}RNTI(i))}$ represents the second power control parameter of the multicast service (i); $V_{DAI,m_{last(i)}}^{DL}$ represents a DAI parameter of a last DCI of the multicast service (i); $U_{DAI,c(i)}$ represents the number of DCIs of the multicast service (i) received by the UE; $N_{cells}^{DL}$ represents the number of cells in which the UE receives scheduling data; $T_D$ represents a maximum count value of a counter DAI; $N_{TB,max}^{DL}$ represents first multicast configuration information; $N_{m,c(i)}^{received}$ represents the number of transport blocks of the multicast service (i) received by the UE; $N_{SPS,c(i)}$ represents the number of semi-persistently scheduled transport blocks of the multicast service (i); M represents the number of the physical downlink control channel (PDCCH) detection opportunities.

Optionally, a value of $N_{TB,max}^{DL}$ is configured or defaults to 1.
Optionally, the determining a second power control parameter of N multicast services, according to the related parameters of the multicast, includes:

respectively determining the number of missed transport blocks corresponding to DCIs missed by the UE in each multicast service according to the related parameters of the multicast;
respectively determining the number of reception transport blocks corresponding to DCIs received by the UE in each multicast service according to the related parameters of the multicast;
determining the second power control parameter of the N multicast services according to the number of missed transport blocks and the number of reception transport blocks.

Optionally, the respectively determining the number of reception transport blocks corresponding to DCIs received by the UE in each multicast service according to the related parameters of the multicast, includes:

obtaining a sum of the number of transport blocks of a target multicast service received by the UE and the number of semi-persistently scheduled transport blocks of the target multicast service, thereby determining the number of reception transport blocks corresponding to DCIs received by the UE in the target multicast service;

wherein the target multicast service is any one of the N multicast services.

Optionally, the determining, by the UE, a power control parameter of physical uplink control channel (PUCCH) according to the related parameters of the unicast and the related parameters of the multicast, includes:

determining a total number of missed transport blocks corresponding to DCIs missed by the UE in the unicast service and N multicast services according to the related parameters of the unicast and the related parameters of the multicast, wherein N is an integer greater than or equal to 1;
determining a total number of reception transport blocks corresponding to DCIs received by the UE in the unicast service and the multicast service according to the related parameters of the unicast and the related parameters of the multicast;
determining the power control parameters of the PUCCH according to the total number of missed transport blocks and the total number of reception transport blocks.

Optionally, the determining a total number of missed transport blocks corresponding to DCIs missed by the UE in the unicast service and N multicast services according to the related parameters of the unicast and the related parameters of the multicast, includes:

determining the number of missed transport blocks of the unicast corresponding to DCIs missed by the UE in the unicast service according to the related parameters of the unicast;
respectively determining the number of missed transport blocks corresponding to DCIs missed by the UE in each multicast service according to the related parameters of the multicast;
determining the total number of missed transport blocks according to the number of missed transport blocks of the unicast and the number of missed transport blocks corresponding to each multicast service.

Optionally, the respectively determining the number of missed transport blocks corresponding to DCIs missed by the UE in each multicast service according to the related parameters of the multicast, includes:

subtracting a DAI parameter of a last DCI corresponding to a target multicast service from the number of DCIs of the target multicast service received by the UE, thereby obtaining the number of DCIs missed by the UE in the target multicast service;
performing a modulo operation on the number of DCIs missed by the UE and a maximum count value of a counter DAI, thereby obtain an operation result, and multiplying the operation result with first multicast configuration information to obtain the number of missed transport blocks corresponding to DCIs missed by the UE in the target multicast service;
wherein the target multicast service is any one of the N multicast services.

Optionally, the respectively determining the number of missed transport blocks corresponding to DCIs missed by the UE in each multicast service according to the related parameters of the multicast, includes:

obtaining a product of a cycle number of DAI of a target multicast service and a maximum count value of a counter DAI;
obtaining a sum of the product and a DAI parameter of a last DCI received by the UE corresponding to the target multicast service, and subtracting the sum from the number of DCIs of the target multicast service received by the UE, thereby obtaining a first operation result;
multiplying the first operation result with the first multicast configuration information, thereby obtaining the number of missed transport blocks corresponding to DCIs missed by the UE in the target multicast service;
wherein the target multicast service is any one of the N multicast services.

Optionally, the determining the total number of missed transport blocks according to the number of missed transport blocks of the unicast and the number of missed transport blocks corresponding to each multicast service, includes:
obtaining a sum of the number of missed transport blocks of the unicast and the number of missed transport blocks of N multicast services to obtain the total number of missed transport blocks.

Optionally, the determining a total number of missed transport blocks corresponding to DCIs missed by the UE in the unicast service and N multicast services according to the related parameters of the unicast and the related parameters of the multicast, includes:

determining the number of missed transport blocks of the unicast corresponding to DCIs missed by the UE in the unicast service according to the related parameters of the unicast;

determining the number of missed transport blocks of the multicast corresponding to DCIs missed by the UE in the N multicast services according to the related parameters of the multicast; wherein the number of the missed transport blocks of the multicast is a total number of transport blocks missed by the UE in the N multicast services;

determining the total number of missed transport blocks according to the number of missed transport blocks of the unicast and the number of missed transport blocks of the multicast.

Optionally, the determining the number of missed transport blocks of the multicast corresponding to DCIs missed by the UE in the N multicast services according to the related parameters of the multicast, includes:

subtracting a sum of DAI parameters of last DCIs corresponding to the N multicast services from a sum of numbers of DCIs of the N multicast services received by the UE, thereby obtaining a total number of DCIs missed by the UE; performing a modulo operation on the total number of DCIs missed by the UE and a maximum count value of a counter DAI, thereby obtain an operation result, and multiplying the operation result with first multicast configuration information to obtain the number of missed multicast transport blocks corresponding to DCIs missed by the UE in the N multicast services.

Optionally, the determining the number of missed transport blocks of the multicast corresponding to DCIs missed by the UE in the N multicast services according to the related parameters of the multicast, includes:

obtaining a product of a cycle number of DAI of a target multicast service and a maximum count value of a counter DAI;

obtaining a sum of the product and the number of DCIs of the target multicast service received by the UE, thereby obtaining a second operation result;

obtaining a sum of second operation results corresponding to the N multicast services, and subtracting the sum of the second operation results from the sum of the DCIs of the N multicast services received by the UE to obtain a third operation result;

multiplying the third operation result with the first multicast configuration information, thereby obtaining the number of missed transport blocks corresponding to DCIs missed by the UE in the N multicast service.

Optionally, the determining the total number of missed transport blocks according to the number of missed transport blocks of the unicast and the number of missed transport blocks of the multicast, includes:

obtaining a sum of the number of missed transport blocks of the unicast and the number of missed transport blocks of the multicast to obtain the total number of missed transport blocks.

Optionally, in case that the first multicast configuration information is 1, the power control parameter of the target multicast service is: a bit number of HARQ-ACK sub-codebook of a target multicast service fed back by the UE corresponding to the target multicast service on a PUCCH.

Optionally, the number of semi-persistently scheduled transport blocks of the target multicast service is included in the bit number of the HARQ-ACK sub-codebook of the target multicast service;

or

the number of semi-persistently scheduled transport blocks of the target multicast service is included in a bit number of a HARQ-ACK sub-codebook of the unicast service.

Optionally, the determining a total number of missed transport blocks corresponding to DCIs missed by the UE in the unicast service and N multicast services according to the related parameters of the unicast and the related parameters of the multicast, includes:

obtaining a sum of a DAI parameter of a last DCI in DCIs of the unicast service and DAI parameters of last DCIs corresponding to the N multicast services, subtracting the sum from a total number of DCIs received by the UE to obtain a total number of DCIs missed by the UE;

performing a modulo operation on the total number of DCIs missed by the UE and a maximum count value of a counter DAI, thereby obtain an operation result, and multiplying the operation result with first multicast configuration information to obtain the total number of missed transport blocks corresponding to DCIs missed by the UE in the unicast services and the N multicast services.

Optionally, the determining a total number of missed transport blocks corresponding to DCIs missed by the UE in the unicast service and N multicast services according to the related parameters of the unicast and the related parameters of the multicast, includes:

calculating the total number of missed transport blocks through the following formula:

$$n_{\text{HARQ-ACK,part1}} = \left( \left( \left( V^{\text{DL}}_{\text{DAI},m_{\text{last(Unicast)}}} + j(\text{unicast}) * T_D + \sum_{i=0}^{N-1} (V^{\text{DL}}_{\text{DAI},m_{\text{last(i)}}} + j(i) * T_D) \right. \right. \right.$$

$$\left. \left. \left. - \sum_{c=0}^{N^{\text{DL}}_{\text{cells}}-1} U_{\text{DAI},c} \right) \mod(T_D) \right) N^{\text{DL}}_{\text{TB,max}} \right.$$

wherein $n_{\text{HARQ-ACK,part1}}$ represents the total number of missed transport blocks; $V^{\text{DL}}_{\text{DAI},m_{\text{last(unicast)}}}$ represents a DAI parameter of a last DCI in DCIs of the unicast service; $V^{\text{DL}}_{\text{DAI},m_{\text{last(i)}}}$ represents a DAI parameter of a last DCI in the DCIs of a multicast service (i); j(unicast) represents a cycle number of DAIs for unicast services; j (i) represents a cycle number of DAIs for multicast services (i); $T_D$ represents a maximum count value of counter DAI; $U_{\text{DAI},c}$ represents a total number of DCIs of the unicast service and all multicast services, received by the UE; $N^{\text{DL}}_{\text{TB,max}}$ represents the first multicast configuration information; $N^{\text{DL}}_{\text{cells}}$ represents the number of cells in which the UE receives scheduling data.

Optionally, the determining a total number of reception transport blocks corresponding to DCIs received by the UE in the unicast service and the multicast service according to the related parameters of the unicast and the related parameters of the multicast, includes:
determining the total number of reception transport blocks, according to a total number of transport blocks of the unicast service and N multicast services received by the UE, and a total number of semi-persistently scheduled transport blocks of the unicast service and the multicast service.

Optionally, the power control parameter of the PUCCH refers to a power control parameter that needs to feed back HARQ-ACK, and feedback of the HARQ-ACK is based on acknowledgment (ACK)/negative acknowledgment (NACK).

Optionally, the power control parameters of the PUCCH include:
related DCI and transport blocks for feedback that convert NACK-only to ACK/NACK.

Embodiments of the present disclosure provide a power control parameter determining device, including: a memory, a transceiver, and a processor;

wherein the memory is used to store a computer program; the transceiver is used to transmit and receive data under control of the processor; the processor is used to read the computer program in the memory and perform the following operations:
obtaining related parameters of unicast and related parameters of multicast; and
determining a power control parameter of physical uplink control channel (PUCCH) according to the related parameters of the unicast and the related parameters of the multicast.

Optionally, the related parameters of the multicast include at least one of the following:

a downlink assignment index (DAI) parameter of a last downlink control information (DCI) in DCIs of the multicast;
the number of DCIs of the multicast received by the UE;
the number of transport blocks of the multicast received by the UE;
the number of semi-persistently scheduled transport blocks of the multicast received by the UE.

Optionally, the processor is used to read the computer program in the memory and perform the following operations:

determining a first power control parameter of a unicast service according to the related parameters of the unicast;

determining a second power control parameter of N multicast services, according to the related parameters of the multicast; wherein N is an integer greater than or equal to 1;

determining the power control parameter of the PUCCH according to the first power parameter and the second power parameter.

Optionally, the processor is used to read the computer program in the memory and perform the following operations:

obtaining a sum of the first power control parameter and the N second power control parameters to obtain the power control parameter of the PUCCH, which is expressed with the following formula:

$$n_{\text{HARQ-ACK,TB}} = n_{\text{HARQ-ACK,TB(unicast)}} + \sum_{i=0}^{N-1} n_{\text{HARQ-ACK,TB(G-RNTI(i))}}$$

wherein $n_{\text{HARQ-ACK,TB}}$ represents the power control parameter of the PUCCH; $n_{\text{HARQ-ACK,TB(unicast)}}$ represents the first power parameter of the unicast service; $n_{\text{HARQ-ACK,TB(G-RNTI(i))}}$ represents a second power parameter of a multicast service (i); N represents the total number of multicast services.

Optionally, the second power control parameter $n_{\text{HARQ-ACK,TB (G-RNTI(i))}}$ is equal to a bit number of HARQ-ACK sub-codebook of the multicast service (i) fed back by the UE corresponding to the multicast service (i) on a PUCCH.

Optionally, the second power control parameter is calculated with the following formula:

$$n_{\text{HARQ-ACK,TB (G-RNTI(i))}}$$

$$= \left( \left( \left( V_{\text{DAI},m_{\text{last(i)}}}^{\text{DL}} - \sum_{c=0}^{N_{\text{cells}}^{\text{DL}}-1} U_{\text{DAI},c(i)} \right) \bmod(T_{\text{D}}) \right) N_{\text{TB,max}}^{\text{DL}} \right.$$

$$+ \sum_{c=0}^{N_{\text{cells}}^{\text{DL}}-1} \left( \sum_{m=0}^{M-1} N_{m,c(i)}^{\text{received}} + N_{\text{SPS},c(i)} \right)$$

wherein $n_{\text{HARQ-ACK,TB (G-RNTI(i))}}$ represents the second power control parameter of the multicast service (i); $V_{\text{DAI},m_{\text{last(i)}}}^{\text{DL}}$ represents a DAI parameter of a last DCI of the multicast service (i); $U_{\text{DAI},c(i)}$ represents the number of DCIs of the multicast service (i) received by the UE; $N_{\text{cells}}^{\text{DL}}$ represents the number of cells in which the UE receives scheduling data; $T_{\text{D}}$ represents a maximum count value of a counter DAI; $N_{\text{TB,max}}^{\text{DL}}$ represents first multicast configuration information; $N_{m,c(i)}^{\text{received}}$ represents the number of transport blocks of the multicast service (i) received by the UE; $N_{\text{SPS},c(i)}$ represents the number of semi-persistently scheduled transport blocks of the multicast service (i); M represents the number of the physical downlink control channel (PDCCH) detection opportunities.

Optionally, a value of $N_{\text{TB,max}}^{\text{DL}}$ is configured or defaults to 1.

Optionally, the processor is used to read the computer program in the memory and perform the following operations:

respectively determining the number of missed transport blocks corresponding to DCIs missed by the UE in each multicast service according to the related parameters of the multicast;

respectively determining the number of reception transport blocks corresponding to DCIs received by the UE in each multicast service according to the related parameters of the multicast;

determining the second power control parameter of the N multicast services according to the number of missed transport blocks and the number of reception transport blocks.

Optionally, the processor is used to read the computer program in the memory and perform the following operations:

obtaining a sum of the number of transport blocks of a target multicast service received by the UE and the number of semi-persistently scheduled transport blocks of the target multicast service, thereby determining the number of reception transport blocks corresponding to DCIs received by the UE in the target multicast service;

wherein the target multicast service is any one of the N multicast services.

Optionally, the processor is used to read the computer program in the memory and perform the following operations:

determining a total number of missed transport blocks corresponding to DCIs missed by the UE in the unicast service and N multicast services according to the related parameters of the unicast and the related parameters of the multicast, wherein N is an integer greater than or equal to 1;

determining a total number of reception transport blocks corresponding to DCIs received by the UE in the unicast service and the multicast service according to the related parameters of the unicast and the related parameters of the multicast;

determining the power control parameters of the PUCCH according to the total number of missed transport blocks and the total number of reception transport blocks.

Optionally, the processor is used to read the computer program in the memory and perform the following operations:

determining the number of missed transport blocks of the unicast corresponding to DCIs missed by the UE in the unicast service according to the related parameters of the unicast;

respectively determining the number of missed transport blocks corresponding to DCIs missed by the UE in each multicast service according to the related parameters of the multicast;

determining the total number of missed transport blocks according to the number of missed transport blocks of the unicast and the number of missed transport blocks corresponding to each multicast service.

Optionally, the processor is used to read the computer program in the memory and perform the following operations:

subtracting a DAI parameter of a last DCI corresponding to a target multicast service from the number of DCIs of the target multicast service received by the UE, thereby obtaining the number of DCIs missed by the UE in the target multicast service;

performing a modulo operation on the number of DCIs missed by the UE and a maximum count value of a counter DAI, thereby obtain an operation result, and multiplying the operation result with first multicast configuration information to obtain the number of missed transport blocks corresponding to DCIs missed by the UE in the target multicast service;

wherein the target multicast service is any one of the N multicast services.

Optionally, the processor is used to read the computer program in the memory and perform the following operations:

obtaining a product of a cycle number of DAI of a target multicast service and a maximum count value of a counter DAI;

obtaining a sum of the product and a DAI parameter of a last DCI received by the UE corresponding to the target multicast service, and subtracting the sum from the number of DCIs of the target multicast service received by the UE, thereby obtaining a first operation result;

multiplying the first operation result with the first multicast configuration information, thereby obtaining the number of missed transport blocks corresponding to DCIs missed by the UE in the target multicast service;

wherein the target multicast service is any one of the N multicast services.

Optionally, the processor is used to read the computer program in the memory and perform the following operations:

obtaining a sum of the number of missed transport blocks of the unicast and the number of missed transport blocks of N multicast services to obtain the total number of missed transport blocks.

Optionally, the processor is used to read the computer program in the memory and perform the following operations:

determining the number of missed transport blocks of the unicast corresponding to DCIs missed by the UE in the unicast service according to the related parameters of the unicast;
determining the number of missed transport blocks of the multicast corresponding to DCIs missed by the UE in the N multicast services according to the related parameters of the multicast; wherein the number of the missed transport blocks of the multicast is a total number of transport blocks missed by the UE in the N multicast services;
determining the total number of missed transport blocks according to the number of missed transport blocks of the unicast and the number of missed transport blocks of the multicast.

Optionally, the processor is used to read the computer program in the memory and perform the following operations:

subtracting a sum of DAI parameters of last DCIs corresponding to the N multicast services from a sum of numbers of DCIs of the N multicast services received by the UE, thereby obtaining a total number of DCIs missed by the UE;
performing a modulo operation on the total number of DCIs missed by the UE and a maximum count value of a counter DAI, thereby obtain an operation result, and multiplying the operation result with first multicast configuration information to obtain the number of missed multicast transport blocks corresponding to DCIs missed by the UE in the N multicast services.

Optionally, the processor is used to read the computer program in the memory and perform the following operations:

obtaining a product of a cycle number of DAI of a target multicast service and a maximum count value of a counter DAI;
obtaining a sum of the product and the number of DCIs of the target multicast service received by the UE, thereby obtaining a second operation result;
obtaining a sum of second operation results corresponding to the N multicast services, and subtracting the sum of the second operation results from the sum of the DCIs of the N multicast services received by the UE to obtain a third operation result;
multiplying the third operation result with the first multicast configuration information, thereby obtaining the number of missed transport blocks corresponding to DCIs missed by the UE in the N multicast service.

Optionally, the processor is used to read the computer program in the memory and perform the following operations:
obtaining a sum of the number of missed transport blocks of the unicast and the number of missed transport blocks of the multicast to obtain the total number of missed transport blocks.

Optionally, in case that the first multicast configuration information is 1, the power control parameter of the target multicast service is: a bit number of HARQ-ACK sub-codebook of a target multicast service fed back by the UE corresponding to the target multicast service on a PUCCH.

Optionally, the number of semi-persistently scheduled transport blocks of the target multicast service is included in the bit number of the HARQ-ACK sub-codebook of the target multicast service;

or
the number of semi-persistently scheduled transport blocks of the target multicast service is included in a bit number of a HARQ-ACK sub-codebook of the unicast service.

Optionally, the processor is used to read the computer program in the memory and perform the following operations:

obtaining a sum of a DAI parameter of a last DCI in DCIs of the unicast service and DAI parameters of last DCIs corresponding to the N multicast services, subtracting the sum from a total number of DCIs received by the UE to obtain a total number of DCIs missed by the UE;
performing a modulo operation on the total number of DCIs missed by the UE and a maximum count value of a counter DAI, thereby obtain an operation result, and multiplying the operation result with first multicast configuration information to obtain the total number of missed transport blocks corresponding to DCIs missed by the UE in the unicast services and the N multicast services.

Optionally, the processor is used to read the computer program in the memory and perform the following operations:

calculating the total number of missed transport blocks through the following formula:

$$
n_{\text{HARQ-ACK,part1}} = \left(\left(\left(V^{\text{DL}}_{\text{DAI},m_{\text{last(Unicast)}}} + j(\text{unicast}) * T_D + \sum_{i=0}^{N-1} (V^{\text{DL}}_{\text{DAI},m_{\text{last(i)}}} + j(i) * T_D) \right.\right.\right.
$$

$$
\left.\left.\left. - \sum_{c=0}^{N^{\text{DL}}_{\text{cells}}-1} U_{\text{DAI},c} \right) \mod(T_D) \right) N^{\text{DL}}_{\text{TB,max}}
$$

wherein $n_{\text{HARQ-ACK,part1}}$ represents the total number of missed transport blocks; $V^{\text{DL}}_{\text{DAI},m_{\text{last(unicast)}}}$ represents a DAI parameter of a last DCI in DCIs of the unicast service; $V^{\text{DL}}_{\text{DAI},m_{\text{last(i)}}}$ represents a DAI parameter of a last DCI in the DCIs of a multicast service (i); j (unicast) represents a cycle number of DAIs for unicast services; j (i) represents a cycle number of DAIs for multicast services (i); $T_D$ represents a maximum count value of counter DAI; $U_{\text{DAI},c}$ represents a total number of DCIs of the unicast service and all multicast services, received by the UE; $N^{\text{DL}}_{\text{TB,max}}$ represents the first multicast configuration information; $N^{\text{DL}}_{\text{cells}}$ represents the number of cells in which the UE receives scheduling data.

Optionally, the processor is used to read the computer program in the memory and perform the following operations:

determining the total number of reception transport blocks, according to a total number of transport blocks of the unicast service and N multicast services received by the UE, and a total number of semi-persistently scheduled transport blocks of the unicast service and the multicast service.

Optionally, the power control parameter of the PUCCH refers to a power control parameter that needs to feed back HARQ-ACK, and feedback of the HARQ-ACK is based on acknowledgment (ACK)/negative acknowledgment (NACK).

Optionally, the power control parameters of the PUCCH include:

related DCI and transport blocks for feedback that convert NACK-only to ACK/NACK.

Embodiments of the present disclosure provide a power control parameter determining device, including:

an obtaining unit configured to obtain related parameters of unicast and related parameters of multicast; and
a determining unit configured to determine a power control parameter of physical uplink control channel (PUCCH) according to the related parameters of the unicast and the related parameters of the multicast.

Optionally, the related parameters of the multicast include at least one of the following:

a downlink assignment index (DAI) parameter of a last downlink control information (DCI) in DCIs of the multicast;
the number of DCIs of the multicast received by the UE;
the number of transport blocks of the multicast received by the UE;
the number of semi-persistently scheduled transport blocks of the multicast received by the UE.

Optionally, the determining unit includes:

a first determining subunit configured to determine a first power control parameter of a unicast service according to the related parameters of the unicast;
a second determining subunit configured to determine a second power control parameter of N multicast services, according to the related parameters of the multicast; wherein N is an integer greater than or equal to 1;
a third determining subunit configured to determine the power control parameter of the PUCCH according to the first power parameter and the second power parameter.

Optionally, the third determining subunit is further configured to:
obtain a sum of the first power control parameter and the N second power control parameters to obtain the power control parameter of the PUCCH, which is expressed with the following formula: [0171]

$$n_{\text{HARQ-ACK,TB}} = n_{\text{HARQ-ACK,TB(unicast)}} + \sum_{i=0}^{N-1} n_{\text{HARQ-ACK,TB(G-RNTI(i))}}$$

wherein $n_{\text{HARQ-ACK,TB}}$ represents the power control parameter of the PUCCH; $n_{\text{HARQ-ACK,TB(unicast)}}$ represents the first power parameter of the unicast service; $n_{\text{HARQ-ACK,TB(G-RNTI(i))}}$ represents a second power parameter of a multicast service (i); N represents the total number of multicast services.

Optionally, the second power control parameter $n_{\text{HARQ-ACK,TB (G-RNTI(i))}}$ is equal to a bit number of HARQ-ACK sub-codebook of the multicast service (i) fed back by the UE corresponding to the multicast service (i) on a PUCCH.

Optionally, the second power control parameter is calculated with the following formula:

$$n_{\text{HARQ-ACK,TB (G-RNTI(i))}}$$

$$= \left( \left( \left( V_{\text{DAI},m_{\text{last(i)}}}^{\text{DL}} - \sum_{c=0}^{N_{\text{cells}}^{\text{DL}}-1} U_{\text{DAI},c(i)} \right) \mod(T_{\text{D}}) \right) N_{\text{TB,max}}^{\text{DL}} \right.$$

$$+ \sum_{c=0}^{N_{\text{cells}}^{\text{DL}}-1} \left( \sum_{m=0}^{M-1} N_{m,c(i)}^{\text{received}} + N_{\text{SPS},c(i)} \right)$$

wherein $n_{\text{HARQ-ACK,TB (G-RNTI(i))}}$ represents the second power control parameter of the multicast service (i); $V_{\text{DAI},m_{\text{last(i)}}}^{\text{DL}}$ represents a DAI parameter of a last DCI of the multicast service (i); $U_{\text{DAI},c(i)}$ represents the number of DCIs of the multicast service (i) received by the UE; $N_{\text{cells}}^{\text{DL}}$ represents the number of cells in which the UE receives scheduling data; $T_{\text{D}}$ represents a maximum count value of a counter DAI; $N_{\text{TB,max}}^{\text{DL}}$ represents first multicast configuration information; $N_{m,c(i)}^{\text{received}}$ represents the number of transport blocks of the multicast service (i) received by the UE; $N_{\text{SPS},c(i)}$ represents the number of semi-persistently scheduled transport blocks of the multicast service (i); M represents the number of the physical downlink control channel (PDCCH) detection opportunities.

Optionally, a value of $N_{\text{TB,max}}^{\text{DL}}$ is configured or defaults to 1.

Optionally, the second determining subunit is further configured to:

respectively determining the number of missed transport blocks corresponding to DCIs missed by the UE in each multicast service according to the related parameters of the multicast;
respectively determining the number of reception transport blocks corresponding to DCIs received by the UE in each multicast service according to the related parameters of the multicast;
determining the second power control parameter of the N multicast services according to the number of missed transport blocks and the number of reception transport blocks.

Optionally, when respectively determining the number of reception transport blocks corresponding to DCI received by the UE in each multicast service according to the related parameters of the multicast, the second determining subunit is further configured to:

obtain a sum of the number of transport blocks of a target multicast service received by the UE and the number of semi-persistently scheduled transport blocks of the target multicast service, thereby determining the number of reception transport blocks corresponding to DCIs received by the UE in the target multicast service;
wherein the target multicast service is any one of the N multicast services.

Optionally, the determining unit includes:

a fourth determining subunit configured to determine a total number of missed transport blocks corresponding to DCIs missed by the UE in the unicast service and N multicast services according to the related parameters of the unicast and the related parameters of the multicast, wherein N is an integer greater than or equal to 1;
a fifth determining subunit configured to determine a total number of reception transport blocks corresponding to DCIs received by the UE in the unicast service and the multicast service according to the related parameters of the unicast and the related parameters of the multicast;
a sixth determining subunit configured to determine the power control parameters of the PUCCH according to the total number of missed transport blocks and the total number of reception transport blocks.

Optionally, the fourth determining subunit is specifically configured to:

determine the number of missed transport blocks of the unicast corresponding to DCIs missed by the UE in the unicast service according to the related parameters of the unicast;
respectively determine the number of missed transport blocks corresponding to DCIs missed by the UE in each multicast service according to the related parameters of the multicast;
determine the total number of missed transport blocks according to the number of missed transport blocks of the unicast and the number of missed transport blocks corresponding to each multicast service.

Optionally, when respectively determining the number of missed transport blocks corresponding to DCIs missed by the UE in each multicast service according to the related parameters of the multicast, the fourth determining subunit is specifically configured to:

subtracting a DAI parameter of a last DCI corresponding to a target multicast service from the number of DCIs of the target multicast service received by the UE, thereby obtaining the number of DCIs missed by the UE in the target multicast service;
performing a modulo operation on the number of DCIs missed by the UE and a maximum count value of a counter DAI, thereby obtain an operation result, and multiplying the operation result with first multicast configuration information to obtain the number of missed transport blocks corresponding to DCIs missed by the UE in the target multicast service;
wherein the target multicast service is any one of the N multicast services.

Optionally, when respectively determining the number of missed transport blocks corresponding to DCIs missed by the UE in each multicast service according to the related parameters of the multicast, the fourth determining subunit is specifically configured to:

obtain a product of a cycle number of DAI of a target multicast service and a maximum count value of a counter DAI;
obtain a sum of the product and a DAI parameter of a last DCI received by the UE corresponding to the target multicast service, and subtract the sum from the number of DCIs of the target multicast service received by the UE, thereby obtaining a first operation result;
multiply the first operation result with the first multicast configuration information, thereby obtaining the number of missed transport blocks corresponding to DCIs missed by the UE in the target multicast service;
wherein the target multicast service is any one of the N multicast services.

Optionally, when determining the total number of missed transport blocks according to the number of missed transport blocks of the unicast and the number of missed transport blocks corresponding to each multicast service, the fourth determining subunit is specifically configured to:
obtain a sum of the number of missed transport blocks of the unicast and the number of missed transport blocks of N multicast services to obtain the total number of missed transport blocks.

Optionally, the fourth determining subunit is specifically configured to:

determine the number of missed transport blocks of the unicast corresponding to DCIs missed by the UE in the unicast service according to the related parameters of the unicast;

determine the number of missed transport blocks of the multicast corresponding to DCIs missed by the UE in the N multicast services according to the related parameters of the multicast; wherein the number of the missed transport blocks of the multicast is a total number of transport blocks missed by the UE in the N multicast services;

determine the total number of missed transport blocks according to the number of missed transport blocks of the unicast and the number of missed transport blocks of the multicast.

Optionally, when determining the number of missed transport blocks of the multicast corresponding to DCIs missed by the UE in N multicast services according to the related parameters of multicast, the fourth determining subunit is specifically configured to:

subtract a sum of DAI parameters of last DCIs corresponding to the N multicast services from a sum of numbers of DCIs of the N multicast services received by the UE, thereby obtaining a total number of DCIs missed by the UE;

perform a modulo operation on the total number of DCIs missed by the UE and a maximum count value of a counter DAI, thereby obtain an operation result, and multiply the operation result with first multicast configuration information to obtain the number of missed multicast transport blocks corresponding to DCIs missed by the UE in the N multicast services.

Optionally, when determining the number of missed transport blocks of the multicast corresponding to DCIs missed by the UE in the N multicast services according to multicast related parameters of multicast, the fourth determining subunit is specifically configured to:

obtain a product of a cycle number of DAI of a target multicast service and a maximum count value of a counter DAI;

obtain a sum of the product and the number of DCIs of the target multicast service received by the UE, thereby obtaining a second operation result;

obtain a sum of second operation results corresponding to the N multicast services, and subtract the sum of the second operation results from the sum of the DCIs of the N multicast services received by the UE to obtain a third operation result;

multiply the third operation result with the first multicast configuration information, thereby obtaining the number of missed transport blocks corresponding to DCIs missed by the UE in the N multicast service.

Optionally, when determining the total number of missed transport blocks according to the number of missed transport blocks of unicast and the number of missed transport blocks of multicast, the fourth determining subunit is specifically configured to:

obtain a sum of the number of missed transport blocks of the unicast and the number of missed transport blocks of the multicast to obtain the total number of missed transport blocks.

Optionally, in case that the first multicast configuration information is 1, the power control parameter of the target multicast service is: a bit number of HARQ-ACK sub-codebook of a target multicast service fed back by the UE corresponding to the target multicast service on a PUCCH.

Optionally, the number of semi-persistently scheduled transport blocks of the target multicast service is included in the bit number of the HARQ-ACK sub-codebook of the target multicast service;

or

the number of semi-persistently scheduled transport blocks of the target multicast service is included in a bit number of a HARQ-ACK sub-codebook of the unicast service.

Optionally, the fourth determining subunit is specifically configured to:

obtain a sum of a DAI parameter of a last DCI in DCIs of the unicast service and DAI parameters of last DCIs corresponding to the N multicast services, subtract the sum from a total number of DCIs received by the UE to obtain a total number of DCIs missed by the UE;

perform a modulo operation on the total number of DCIs missed by the UE and a maximum count value of a counter DAI, thereby obtain an operation result, and multiply the operation result with first multicast configuration information to obtain the total number of missed transport blocks corresponding to DCIs missed by the UE in the unicast services and the N multicast services.

Optionally, the fourth determining subunit is specifically configured to:

calculate the total number of missed transport blocks through the following formula:

$$
n_{\text{HARQ-ACK,part1}} = \left( \left( \left( V_{\text{DAI,m}_{\text{last(Unicast)}}}^{\text{DL}} + j(\text{unicast}) * T_D + \sum_{i=0}^{N-1} (V_{\text{DAI,m}_{\text{last(i)}}}^{\text{DL}} + j(i) * T_D) \right. \right. \right.
$$

$$
\left. \left. \left. - \sum_{c=0}^{N_{\text{cells}}^{\text{DL}}-1} U_{\text{DAI,c}} \right) \mod(T_D) \right) N_{\text{TB,max}}^{\text{DL}} \right.
$$

wherein $n_{\text{HARQ-ACK,part1}}$ represents the total number of missed transport blocks; $V_{\text{DAI,m}_{\text{last(unicast)}}}^{\text{DL}}$ represents a DAI parameter of a last DCI in DCIs of the unicast service; $V_{\text{DAI,m}_{\text{last(i)}}}^{\text{DL}}$ represents a DAI parameter of a last DCI in the DCIs of a multicast service (i); j(unicast) represents a cycle number of DAIs for unicast services; j (i) represents a cycle number of DAIs for multicast services (i); $T_D$ represents a maximum count value of counter DAI; $U_{\text{DAI,c}}$ represents a total number of DCIs of the unicast service and all multicast services, received by the UE; $N_{\text{TB,max}}^{\text{DL}}$ represents the first multicast configuration information; $N_{\text{cells}}^{\text{DL}}$ represents the number of cells in which the UE receives scheduling data.

Optionally, the fifth determining subunit is specifically configured to:
determine the total number of reception transport blocks, according to a total number of transport blocks of the unicast service and N multicast services received by the UE, and a total number of semi-persistently scheduled transport blocks of the unicast service and the multicast service.

Optionally, the power control parameter of the PUCCH refers to a power control parameter that needs to feed back HARQ-ACK, and feedback of the HARQ-ACK is based on acknowledgment (ACK)/negative acknowledgment (NACK).

Optionally, the power control parameters of the PUCCH include:
related DCI and transport blocks for feedback that convert NACK-only to ACK/NACK.

Embodiments of the present disclosure provide a processor-readable storage medium, including a computer program stored thereon; wherein the computer program, when executed by a processor, causes the processor to perform steps of the above power control parameter determining method.

In the embodiment of the present disclosure, the UE determines the power control parameter of the PUCCH used to transmit the broadcast-multicast HARQ-ACK codebook according to the related parameters of the unicast and the related parameters of the multicast, so that the UE can perform better power control, thereby maximizing the power efficiency, which not only meets requirements of transmission power of PUCCH, but also saves power.

## BRIEF DESCRIPTION OF THE DRAWINGS

FIG. 1 is a schematic diagram showing a dynamic codebook;
FIG. 2 is a schematic flowchart of a power control parameter determining method according to an embodiment of the present disclosure;
FIG. 3 is a first schematic diagram of a power control parameter determining device according to an embodiment of the present disclosure; and

FIG. 4 is a second schematic diagram of a power control parameter determining device according to an embodiment of the present disclosure.

## DETAILED DESCRIPTION

In order to make the technical problems, the technical solutions and the advantages of the present disclosure more apparent, the present disclosure will be described hereinafter in conjunction with the drawings and embodiments. In the following descriptions, to facilitate understanding embodiments of the present disclosure, specific configurations and specific details of components are provided. Thus, persons having ordinary skill in the art should understand that, various changes and modifications may be made to the embodiments described here, without departing from scope and spirit of the present disclosure. In addition, for clarity and simplicity, descriptions about known functions and constructions are omitted.

It is to be understood that, the phrase "one embodiment" or "an embodiment" as used throughout the specification means that a particular feature, structure, or characteristic relating to an embodiment is included in at least one embodiment of the present disclosure. Thus, "in one embodiment" or "in an embodiment" as used throughout the specification does not necessarily refer to the same embodiment. In addition, these specific features, structures, or characteristics may be combined in any suitable manner in one or more embodiments.

In various embodiments of the present disclosure, it is to be understood that, the sequence numbers of the following processes do not imply the order of execution. The order of execution of each process should be determined by its function and internal logic, which should not constitute any limitation to the implementation processes of the embodiments of the application.

The terms "and/or" in the embodiments of the present disclosure are used to describe association relationship between associated objects, and indicate that there may be three relationships, for example, A and/or B means there are three situations, i.e., there is A alone, there are both of A and B, or, there is B alone. The character "/" generally means that relationship between associated objects before and after the character "/" is "or".

The term "plurality" in the embodiments of the present disclosure means two or more, and other quantifiers are similar.

The technical solutions in the embodiments of the present disclosure will be described hereinafter in a clear and complete manner in conjunction with the accompanying drawings of the embodiments of the present disclosure. Obviously, the following embodiments are merely a part of, rather than all of, the embodiments of the present disclosure, and based on these embodiments, a person skilled in the art may obtain the other embodiments, which also fall within the scope of the present disclosure.

When describing the embodiments of the present disclosure, some concepts used in the following description will first be explained.

One: HARQ-ACK dynamic codebook (type-2) mechanism.

The 5G system supports generation mechanism of dynamic HARQ-ACK codebook, and its principle is that DAI indication is added when transmitting a scheduling signaling DCI, and the UE side calculates, according to counter DAI, the number of DCIs and Physical downlink shared channels (PDSCHs) actually transmitted by the base station, thereby determining the number of PDSCHs that need to be fed back included in the HARQ-ACK codebook.

The following describes the process of the HARQ-ACK dynamic codebook mechanism in a single-carrier scenario (only C-DAI).

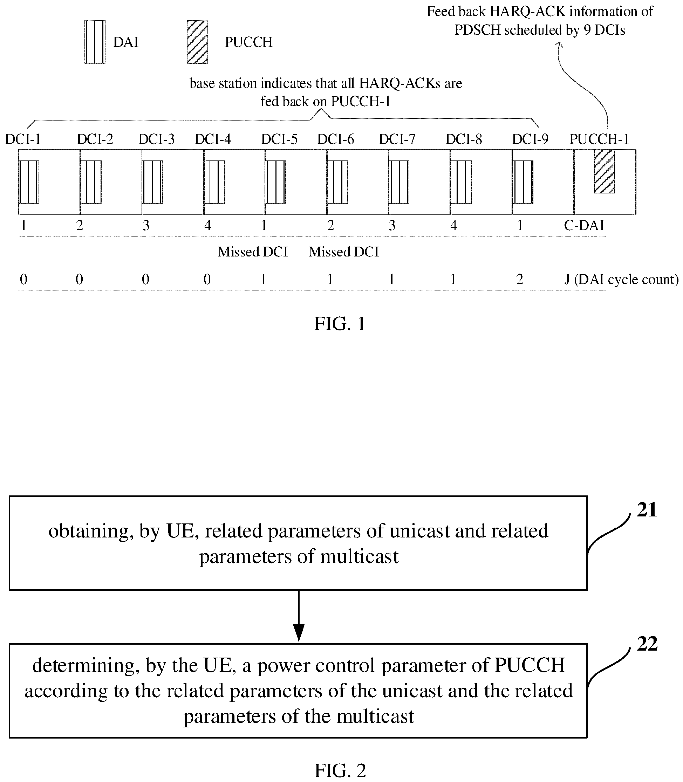

As shown in FIG. 1, it is assumed that a base station transmits nine DCIs for scheduling PDSCHs, namely DCI-1 to DCI-9, a bit width of counter DAI is 2 bits, that is, a maximum counting range is $T_D=4$. j represents the number of cycles used by the UE side to calculate the DAI value (when the DAI in the current DCI is less than or equal to the DAI in the previous DCI, j is incremented by 1).

With the DAI counting mechanism, the UE can calculate the number of DCIs transmitted by the base station with the following calculation method:

$$V_{DAI,m_{last}}^{DL} + T_D * j$$

In the above formula, $V_{DAI,m_{last}}^{DL}$ represents a DAI value of the last DCI (in DCI-9, DAI=1), that is, the number of schedule DCIs is 1+4*2=9. The UE further calculates, according to the number of schedule DCIs, the number of transport blocks for feeding back HARQ-ACK, and the bit number $O_{ACK}$ of corresponding HARQ codebook.

It is to be noted that for multi-carrier scenario, in addition to C-DAI, a total DAI (T-DAI) is further included and used to count all carriers, and then T-DAI can be used instead of $V^{DL}_{DAI,m_{last}}$.

When the base station schedules a codebook feedback supporting multicast, the bit number $O_{ACK}$ of the HARQ-ACK codebook fed back by the UE on PUCCH is equal to the sum of the bit numbers of unicast HARQ sub-codebook and multicast HARQ sub-codebook, for example,

$$O_{ACK} = O_{ACK}(unicast) + \sum_{i=0}^{N-1} O_{ACK(G\text{-}RNIT(i))}$$

In the above formula, $O_{ACK}$(unicast) represents a length of the HARQ-ACK sub-codebook calculated for unicast; $O_{ACK(G\text{-}RNIT(i))}$ is a length of a sub-codebook corresponding to multicast G-RNTI(i), and N is a length of HARQ-ACK codebook configured by the base station to be fed back on the PUCCH.

Specifically, one embodiment of the present disclosure provides a power control parameter determining method, which solves the problem that the existing calculation method of HARQ-ACK sub-codebook of unicast transport blocks cannot be applied to power control parameters of multicast PUCCH.

As shown in FIG. 2, one embodiment of the present disclosure provides a power control parameter determining method, which specifically includes the following steps.

Step 21: obtaining, by a user equipment (UE), related parameters of unicast and related parameters of multicast.

The related parameters of the unicast include, for example, the number of unicast transport blocks received by the UE, the number of semi-persistent scheduled unicast transport blocks received by the UE, and Downlink Assignment index (DAI) parameter of the last DCI in unicast DCIs, the number of unicast DCIs received by the UE, and unicast-related configuration information. When one or more related parameters of the unicast are not obtained, related parameters that have not been obtained may be represented as 0.

The related parameters of multicast may include at least one of the following: Downlink Assignment index (DAI) parameter of the last DCI in multicast DCIs, the number of multicast DCIs received by the UE, the number of multicast transport blocks received by the UE, and the number of semi-persistent scheduled multicast transport blocks received by the UE.

It is to be noted that the related parameters of the unicast and the related parameters of the multicast include but are not limited to one or more of the above parameters, and may further include other parameters used to determine a power control parameter of PUCCH for multicast HARQ-ACK.

It is to be noted that the unicast refers to a point-to-point (PTP) scheduling and data transmission manner, which may also be referred to as single UE-based scheduling. The unicast service in the embodiment of the present disclosure refers to service data transmitted in a unicast manner.

The multicast refers to data scheduled by point-to-multipoint (PTM), which may also be referred as UE-group-based scheduling. The multicast service in the embodiment of the present disclosure refers to service data transmitted in a multicast manner.

The related parameters of the unicast and the related parameters of the multicast may be downlink data or sidelink data.

Step 22: determining, by the UE, a power control parameter of physical uplink control channel (PUCCH) according to the related parameters of the unicast and the related parameters of the multicast.

In this embodiment, when the UE determines the power control parameter of PUCCH, the UE can use the foregoing one or more parameters for determination. For example, the power control parameter of PUCCH can be determined according to parameters such as DAI parameter of the last DCI in one or more multicast DCI scheduling information, the number of multicast scheduling signaling (that is, the number of DCIs) received by the UE, the number of multicast transport blocks received by the UE, the number of semi-persistent scheduled multicast transport blocks. The power control parameter refers to a power control parameter of PUCCH used to transmit HARQ-ACK.

Optionally, the power control parameter of the PUCCH refers to a power control parameter that needs to feed back HARQ-ACK, and feedback of the HARQ-ACK is based on acknowledgment (ACK)/negative acknowledgment (NACK) (that is, feeding back NACK for data decoding error, feeding back ACK for correct decoding), and does not include non-ACK/NACK HARQ-ACK feedback, such as:

not including scheduling signaling and related transport blocks that do not need to feed back HARQ-ACK;
not including scheduling signaling and related transport blocks for HARQ-ACK based on NACK-only (that is, feeding back NACK if decoding is wrong, not feeding back any information if the decoding is correct).
relate DCI and transport blocks for feedback that convert NACK-only to ACK/NACK according to certain conditions, may be included.

In the embodiment of the present disclosure, the UE determines the power control parameter of the PUCCH used to transmit the broadcast-multicast HARQ-ACK codebook according to the related parameters of the unicast and the related parameters of the multicast, so that the UE can perform better power control, thereby maximizing the power efficiency, which not only meets requirements of transmission power of PUCCH, but also saves power.

Implementation manner in which the UE determines the power control parameter according to the related parameters of the unicast and the related parameters of the multicast is described hereinafter with specific embodiments.

As an optional embodiment, when determining the power control parameter of the PUCCH according to the related parameters of the unicast and the related parameters of the multicast, a power control parameter of unicast service and a power control parameter of multicast service may be separately calculated. Specifically, the step 22 may include:

Step 31: determining a first power control parameter of a unicast service according to the related parameters of the unicast.

Optionally, the UE determines the number of unicast missed transport blocks corresponding to DCI missed by the UE in the unicast service, according to the related parameters of the unicast; the UE determines the number of unicast reception transport blocks corresponding to DCI received by the UE in the unicast service, according to the related parameters of the unicast; and the UE determines a first power control parameter according to the number of unicast missed transport blocks and the number of unicast reception transport blocks. The first power control parameter is a sum of the number of unicast missed transport blocks and the number of unicast reception transport blocks.

Specifically, the number of unicast missed transport blocks and the number of unicast reception transport blocks may be respectively calculated based on the DAI parameter of the last DCI in DCIs of the unicast service, the number of unicast DCIs received by the UE, the number of all unicast transport blocks received by the UE, the number of semi-persistent scheduled unicast transport blocks received by the UE and unicast configuration information configured by the base station.

Step 32: determining a second power control parameter of N multicast services, according to related multicast parameters, where N is an integer greater than or equal to 1.

Optionally, the determining the second power control parameter of the N multicast services according to the related parameters of the multicast, includes: according to the related parameters of the multicast, respectively determining the number of missed transport blocks corresponding to DCI missed by the UE in each multicast service; according to the related parameters of the multicast, respectively determining the number of reception transport blocks corresponding to DCI received by the UE in each multicast service; determining the second power control parameter of the N multicast services according to the number of missed transport blocks and the number of reception transport blocks.

A sum of the number of missed transport blocks and the number of reception transport blocks is the second power control parameter of the multicast service.

Step 33: determining the power control parameter of the PUCCH according to the first power parameter and the second power parameter.

In this embodiment, the sum of the first power parameter and the second power parameter of the N multicast services is the power control parameter of the PUCCH.

Further, in the step 32, when calculating the second power control parameter of each multicast service, the number of missed transport blocks and the number of reception transport blocks of each multicast service need to be calculated respectively. The sum of the number of missed transport blocks corresponding to a target multicast service and the number of reception transport blocks corresponding to the target multicast service, is a second power control parameter of the target multicast service.

According to the related parameters of the multicast, respectively determining the number of missed transport blocks corresponding to DCI missed by the UE in each multicast service of N multicast services, includes the following two modes:

First mode: subtracting a DAI parameter of the last DCI corresponding to a target multicast service from the number of DCIs of the target multicast service received by the UE, thereby obtaining the number of DCIs missed by the UE in the target multicast service; performing a modulo operation on the number of DCI missed by the UE and a maximum count value of the counter DAI, thereby obtain an operation result, and multiplying the operation result with first multicast configuration information to obtain the number of missed transport blocks corresponding to DCI missed by the UE in the target multicast service; where the target multicast service is any one of the N multicast services.

For the first mode, taking the target multicast service being a multicast service (i) as an example, the number of missed transport blocks corresponding to DCI missed by the UE in the multicast service (i) can be expressed with $n_{\text{HARQ-ACK,part1 (G-RNTI(i))}}$, which is specifically expressed as:

$$n_{\text{HARQ-ACK,part1 (G-RNTI(i))}} = \left(\left(V^{DL}_{DAI,m_{last(i)}} - \sum_{c=0}^{N^{DL}_{cells}-1} U_{DAI,c(i)}\right) \mod(T_D)\right) N^{DL}_{TB,max}$$

Where $V^{DL}_{DAI,m_{last(i)}}$ represents a DAI parameter of the last DCI of the multicast service (i); $U_{DAI,c(i)}$ represents the number of DCIs of the multicast service (i) received by the UE, when no related DCI scheduling information of the multicast service (i) is received, the related parameters are all 0; $N^{DL}_{cells}$ represents the number of cells in which the UE receives scheduling data; $T_D$ indicates the maximum count value of the counter DAI; and $N^{DL}_{TB,max}$ represents the first multicast configuration information.

Second mode: obtaining a product of a cycle number of DAI of a target multicast service and a maximum count value of a counter DAI; obtaining a sum of the product and a DAI parameter of the last DCI received by the UE corresponding to the target multicast service, and subtracting the sum from the number of DCIs of the target multicast service received by the UE, thereby obtaining a first operation result; multiplying the first operation result with the first multicast configuration information, thereby obtaining the number of missed transport blocks corresponding to DCI missed by the UE in the target multicast service; where the target multicast service is any one of the N multicast services.

It is to be noted that, if the first multicast configuration information is 1, the step of "multiplying the first operation result with the first multicast configuration information" may be omitted.

For the second mode, taking the target multicast service being a multicast service (i) as an example, the number of missed transport blocks corresponding to DCI missed by the UE in the multicast service (i) can be expressed by $n_{\text{HARQ-ACK,part1 (G-RNTI(i))}}$, which may be specifically expressed as:

$$n_{\text{HARQ-ACK,part1 (G-RNTI(i))}} = \left(V^{DL}_{DAI,m_{last(i)}} + j(i) * T_D - \sum_{c=0}^{N^{DL}_{cells}-1} U_{DAI,c(i)}\right) N^{DL}_{TB,max}$$

Where j(i) represents the cycle number of DAI of the multicast service (i).

It is to be noted that, for the first mode, the bit width of counter DAI is 2 bits, that is, the maximum counting range is $T_D$=4. When calculating the number of missed transport blocks corresponding to missed DCI, the method of the above first mode can be used to calculate modulo of $T_D$.

There are two main considerations as follows:

(1) When the number of DCIs transmitted by the base station is less than or equal to 11, the number of DCIs missed by the UE will not exceed 3.

(2) The result of the formula $V^{DL}_{DAI,m_{last(i)}} - \sum_{c=0}^{N^{DL}_{cells}-1} U_{DAI,c(i)}$ may be a negative value, and a result of a non-negative number can be calculated by using the modulo method.

When the UE supports multicast service scheduling, considering special reasons, such as: due to mobility, when the UE joins the HARQ process that is already in progress, the number of missed DCIs will exceed 3, then, the method of the above second mode can be used to calculate the number of missed transport blocks corresponding to the missed DCIs.

According to the related parameters of the multicast, respectively determining the number of reception transport blocks corresponding to DCI received by the UE in each multicast service, may include:

summing the number of transport blocks of the target multicast service received by the UE and the number of semi-persistently scheduled transport blocks of the target multicast service, and determining the number of reception transport blocks corresponding to DCI received by the UE in the target multicast service; where the target multicast service is any one of the N multicast services.

For the number of reception transport blocks, taking the target multicast service being a multicast service (i) as an example, the number of reception transport blocks corresponding to the DCI received by the UE in the multicast service (i) can be expressed with $n_{\text{HARQ-ACK,part2 (G-RNTI(i))}}$ , which can be specifically expressed as:

$$n_{\text{HARQ-ACK,part2 (G-RNTI(i))}} = \sum_{c=0}^{N_{\text{cells}}^{\text{DL}}-1}\left(\sum_{m=0}^{M-1} N_{m,c(i)}^{\text{received}} + N_{\text{SPS},c(i)}\right).$$

Where $N_{m,c(i)}^{\text{received}}$ represents the number of transport blocks of the multicast service (i) received by the UE; $N_{\text{SPS},c(i)}$ represents the number of semi-persistently scheduled transport blocks of the multicast service (i), that is, Semi-Persistent Scheduling (SPS) Physical downlink shared channel (PDSCH) (PDSCH scheduling without PDCCH) for the multicast service (i); M represents a number of detection opportunities of Physical downlink control channel (PDCCH).

The implementation process of determining the power control parameters of the PUCCH according to the related parameters of the unicast and the related parameters of the multicast in this optional embodiment will be described hereinafter through a specific embodiment.

In this embodiment, power control parameters of the unicast service and each multicast service are separately calculated; and the first power control parameter and the N second power control parameters, which are calculated separately, are summed to obtain the power control parameters of the PUCCH, which can be expressed as:

$$n_{\text{HARQ-ACK,TB}} = n_{\text{HARQ-ACK,TB(unicast)}} + \sum_{i=0}^{N-1} n_{\text{HARQ-ACK,TB(G-RNTI(i))}}.$$

Where $n_{\text{HARQ-ACK,TB}}$ represents the power control parameter of the PUCCH; $n_{\text{HARQ-ACK,TB(unicast)}}$ represents the first power parameter of the unicast service; $n_{\text{HARQ-ACK,TB(G-RNTI(i))}}$ represents the second power control parameter of the multicast service (i); N represents the total number of multicast services.

Specifically, one calculation method of the first power control parameter $n_{\text{HARQ-ACK,TB(unicast)}}$ of the unicast service is as follows:

$$n_{\text{HARQ-ACK,TB (unicast)}}$$

$$= \left(\left(\left(V_{\text{DAI},m_{\text{last (unicast)}}}^{\text{DL}} - \sum_{c=0}^{N_{\text{cells}}^{\text{DL}}-1} U_{\text{DAI},c \text{ (unicast)}}\right) \bmod(T_{\text{D}})\right) N_{\text{TB,max (unicast)}}^{\text{DL}}\right.$$

$$\left. + \sum_{c=0}^{N_{\text{cells}}^{\text{DL}}-1}\left(\sum_{m=0}^{M-1} N_{m,c \text{ (unicast)}}^{\text{received}} + N_{\text{SPS},c \text{ (unicast)}}\right)\right).$$

Where $n_{\text{HARQ-ACK,TB (unicast)}}$ represents the first power control parameter of the unicast service;

$$\left(\left(V_{\text{DAI},m_{\text{last (unicast)}}}^{\text{DL}} - \sum_{c=0}^{N_{\text{cells}}^{\text{DL}}-1} U_{\text{DAI},c \text{ (unicast)}}\right) \bmod(T_{\text{D}})\right) N_{\text{TB,max (unicast)}}^{\text{DL}}$$ represents the number of unicast missed transport blocks of the unicast service; and

$$\left(\left(V_{\text{DAI},m_{\text{last (unicast)}}}^{\text{DL}} - \sum_{c=0}^{N_{\text{cells}}^{\text{DL}}-1} U_{\text{DAI},c \text{ (unicast)}}\right) \bmod(T_{\text{D}})\right) N_{\text{TB,max (unicast)}}^{\text{DL}}$$ represents the number of unicast reception transport blocks of the unicast service. $V_{\text{DAI},m_{\text{last (unicast)}}}^{\text{DL}}$ represents the DAI parameter of the last DCI in the unicast DCI; $U_{\text{DAI},c \text{ (unicast)}}$ represents the number of unicast DCIs received by the UE (that is, the number of scheduling signaling); $T_D$ represents the maximum count value of the counter DAI; $N_{cells}^{DL} - 1$ represents the number of cells configured by the base station for UE to receive scheduling data. $N_{m,c}^{received}$ (unicast) represents the number of all unicast transport blocks received by the UE; $N_{SPS,c}$ (unicast) represents the number of semi-persistently scheduled unicast transport blocks received by the UE, that is, the number of SPS transport blocks for unicast services (PDSCH scheduling without PDCCH). $N_{TB,max}^{DL}$ (unicast) represents unicast configuration information, where when the base station configures DCI to schedule a maximum codeword 2, that is, scheduling 2 transport blocks (or codewords of 2) and needs to feedback 2-bit information, $N_{TB,max}^{DL}$ (unicast) $= 2$, otherwise, $N_{TB,max}^{DL}$ (unicast) $= 1$.

Specifically, one calculation method of the second power control parameter $n_{HARQ-ACK,TB(G-RNTI(i))}$ of the multicast service is as follows, and the number of missed transport blocks and the number of reception transport blocks of the multicast service need to be calculated separately.

$$n_{HARQ-ACK,TB\ (G-RNTI(i))}$$

$$= \left( \left( V_{DAI,m_{last(i)}}^{DL} - \sum_{c=0}^{N_{cells}^{DL}-1} U_{DAI,c(i)} \right) \mod(T_D) \right) N_{TB,max}^{DL}$$

$$+ \sum_{c=0}^{N_{cells}^{DL}-1} \left( \sum_{m=0}^{M-1} N_{m,c(i)}^{received} + N_{SPS,c(i)} \right).$$

Where the parameters in the above formula are all for a certain multicast service identifier G-RNTI, that is, the above parameters are all related parameters for the multicast service (i); $n_{HARQ-ACK,TB\ (G-RNTI(i))}$ represents the second power control parameter of the multicast service (i); $\left( \left( V_{DAI,m_{last(i)}}^{DL} - \sum_{c=0}^{N_{cells}^{DL}-1} U_{DAI,c(i)} \right) \mod(T_D) \right) N_{TB,max}^{DL}$ represents the number of missed transport blocks of the UE in the multicast service (i); $\sum_{c=0}^{N_{cells}^{DL}-1} \left( \sum_{m=0}^{M-1} N_{m,c(i)}^{received} + N_{SPS,c(i)} \right)$ represents the number of transport blocks received by the UE in the multicast service (i). The meanings of other related parameters are the same as those in the first and second modes, and will not be repeated here.

If the base station configures the DCI to schedule a maximum codeword 2, that is, scheduling 2 transport blocks, and needs to feed back 2-bits information, then $N_{TB,max}^{DL} = 2$; otherwise $N_{TB,max}^{DL} = 1$. It is to be noted that in this embodiment, for transmission of broadcast-multicast service, the base station usually will not use one DCI to schedule two codewords, that is, configuring the parameter $N_{TB,max}^{DL}$ to be 1 or a default value of 1, i.e., $N_{TB,max}^{DL} = 1$, at this point, for the dynamic HARQ-ACK codebook, $n_{HARQ-ACK,TB\ (G-RNTI(i))}$ is equal to the bit number of HARQ-ACK sub-codebook of the multicast service (i) fed back by the UE corresponding to the multicast service (i) on a PUCCH, that is, $n_{HARQ-ACK,TB\ (G-RNTI(i))} = O_{ACK(G-RNIT(i))}$, where $O_{ACK(G-RNIT(i))}$ is the length of the sub-codebook corresponding to the multicast service (i).

Optionally, when the multicast service is configured with semi-persistent scheduling, for easy operation, the HARQ-ACK feedback information length of semi-persistent scheduling of the multicast and unicast can be calculated together into the HARQ-ACK codebook of the unicast service; that is, when calculating the power control parameter of the unicast, a total number of the semi-persistently scheduled transport blocks of unicast and multicast are included. At this point, when calculating the HARQ codebook of multicast, the HARQ-ACK feedback length of semi-persistent scheduling of multicast is no longer included; that is, when calculating the power control parameters of the multicast, the number of semi-persistently scheduled transport blocks of the multicast is no longer included.

Optionally, if the semi-persistently scheduled transport blocks of multicast services are not included in the calculation of the power control parameters of unicast services, in addition to calculating dynamic schedule-based transport blocks and corresponding HARQ-ACK feedback, it is further necessary to calculate the HARQ-ACK feedback length of the semi-persistent scheduling of multicast; that is, when calculating the power control parameters of multicast, it is necessary to calculate the dynamic scheduled and semi-persistently scheduled transport blocks of multicast.

Optionally, when the UE supports multicast service scheduling, considering special reasons, such as: due to mobility, when the UE joins the HARQ process that is already in progress, the number of missed DCIs will exceed 3, then, in the above formula for calculation $n_{\text{HARQ-ACK,TB (G-RNTI(i))}}$, the process of modulo calculation can be replaced with: $V_{\text{DAI},m_{\text{last(i)}}}^{\text{DL}} + j * T_D - \sum_{c=0}^{N_{\text{cells}}^{\text{DL}}-1} U_{\text{DAI},c(i)}$; and then, after the foregoing replacement, one calculation method of the second power control parameter $n_{\text{HARQ-ACK,TB(G-RNTI(i))}}$ is as follows:

$$n_{\text{HARQ-ACK,TB (G-RNTI(i))}}$$

$$= \left( V_{\text{DAI},m_{\text{last(i)}}}^{\text{DL}} + j(i) * T_D - \sum_{c=0}^{N_{\text{cells}}^{\text{DL}}-1} U_{\text{DAI},c(i)} \right) N_{\text{TB,max}}^{\text{DL}}$$

$$+ \sum_{c=0}^{N_{\text{cells}}^{\text{DL}}-1} \left( \sum_{m=0}^{M-1} N_{m,c(i)}^{\text{received}} + N_{\text{SPS},c(i)} \right)$$

Where j(i) represents the cycle number of DAI of the multicast service (i).

For the first power control parameter of unicast, the existing calculation method can be maintained; or can be replaced according to the above method, after the replacement, one calculation method of the first power control parameter $n_{\text{HARQ-ACK,TB (unicast)}}$ is as follows:

$$n_{\text{HARQ-ACK,TB (unicast)}}$$

$$= \left( V_{\text{DAI},m_{\text{last (unicast)}}}^{\text{DL}} + j\ (\text{unicast})\ * T_D \right.$$

$$\left. - \sum_{c=0}^{N_{\text{cells}}^{\text{DL}}-1} U_{\text{DAI},c\ (\text{unicast})} \right) N_{\text{TB,max (unicast)}}^{\text{DL}}$$

$$+ \sum_{c=0}^{N_{\text{cells}}^{\text{DL}}-1} \left( \sum_{m=0}^{M-1} N_{m,c\ (\text{unicast})}^{\text{received}} + N_{\text{SPS},c\ (\text{unicast})} \right)$$

Where j(unicast) represents the cycle number of DA1 of the unicast service.

In this embodiment, the power control parameters of the unicast service and each multicast service are calculated separately, and the power control parameters of the unicast service and all multicast services are summed to obtain the power control parameter of the PUCCH. Compared with the existing protocol content, the modification is simple, and it can realize calculation of the power control parameters of the PUCCH channel for transmitting broadcast-multicast HARQ-ACK codebook, so that the UE can perform better power control, thereby maximizing power efficiency.

As an optional embodiment, when determining the power control parameters of the PUCCH according to the related parameters of the unicast and the related parameters of the multicast, it is also possible to separately calculate the number of missed transport blocks of the UE in the unicast service and the number of missed transport blocks of the UE in the multicast service, and the numbers of reception transport blocks of the UE in the unicast service and the multicast service; and then, according to the number of missed transport blocks and the number of reception transport blocks, the power control parameters of the PUCCH can be determined. Specifically, the step 22 may include:

Step 41: according to the related parameters of the unicast and the related parameters of the multicast, determining a total number of missed transport blocks corresponding to missed DCIs of the UE in the unicast service and N multicast services, where N is an integer greater than or equal to 1.

Step 42: according to the related parameters of the unicast and the related parameters of the multicast, determining a total number of reception transport blocks corresponding to DCIs received by the UE in the unicast service and the multicast service.

Step 43: determining a power control parameter of the PUCCH according to the total number of missed transport blocks and the total number of reception transport blocks.

In this embodiment, the total number of missed transport blocks and the total number of reception transport blocks are respectively determined, and the total number of missed transport blocks and the total number of reception transport blocks are summed to obtain the power control parameter of the PUCCH. Specifically, when determining the total number of missed transport blocks and the total number of reception transport blocks, various implementation manners may be included, for example:

Manner 1: the number of missed transport blocks of the unicast service and each multicast service are separately determined, and the numbers of missed transport blocks corresponding to the unicast service and all multicast services are summed to obtain the total number of missed transport blocks; for the unicast service and each multicast service, the total number of reception transport blocks may be jointly calculated.

Manner 2: the number of missed transport blocks of the unicast service is independently determined, and the number of missed transport blocks of the N multicast services are jointly determined, and then the numbers of missed transport blocks corresponding to the unicast service and the N multicast services are summed to obtain the total number of missed transport blocks; for the unicast service and each multicast service, the total number of reception transport blocks may be jointly calculated.

Manner 3: the total number of missed transport blocks of the unicast service and N multicast services are jointly determined, and the total number of reception transport blocks are also jointly determined.

The above three implementation manners will be specifically described hereinafter with examples.

Optionally, for the manner 1, that is, the number of missed transport blocks of the unicast service and each multicast service are separately determined, and the numbers of missed transport blocks corresponding to the unicast service and all multicast services are summed to obtain the total number of missed transport blocks, the step 41 may include:

Step 411: according to the related parameters of unicast, determining the number of missed unicast transport blocks corresponding to DCI missed by the UE in the unicast service.

Step 412: according to the related parameters of the multicast, respectively determine the number of missed transport blocks corresponding to DCI missed by the UE in each multicast service.

Step 413: determining the total number of missed transport blocks according to the number of missed unicast transport blocks and the number of missed transport blocks corresponding to each multicast service.

The number of missed unicast transport blocks and the number of missed transport blocks of N multicast services are summed to obtain the total number of missed transport blocks.

That is, one calculation method of the total number $n_{\text{HARQ-ACK,part1}}$ of missed transport blocks is as follows:

$$n_{\text{HARQ-ACK,part1}} = n_{\text{HARQ-ACK,part1(unicast)}} + \sum_{i=0}^{N-1} n_{\text{HARQ-ACK,part1(G-RNTI(i))}}$$

Where $n_{\text{HARQ-ACK,part1(unicast)}}$ represents the number of missed transport blocks of the unicast service;

$n_{HARQ-ACK,part1(G-RNTI(i))}$ represents the number of missed transport blocks of the multicast service (i).

Optionally, in the above step 412, determining the number of missed transport blocks corresponding to each multicast service, may include the following two modes:

Mode (1): subtracting a DAI parameter of the last DCI corresponding to a target multicast service from the number of DCIs of the target multicast service received by the UE, thereby obtaining the number of DCIs missed by the UE in the target multicast service; performing a modulo operation on the number of DCI missed by the UE and a maximum count value of the counter DAI, thereby obtain an operation result, and multiplying the operation result with first multicast configuration information to obtain the number of missed transport blocks corresponding to DCI missed by the UE in the target multicast service; where the target multicast service is any one of the N multicast services.

For the first (1), taking the target multicast service being a multicast service (i) as an example, the number of missed transport blocks corresponding to DCI missed by the UE in the multicast service (i) can be expressed with $n_{HARQ-ACK,part1\ (G-RNTI(i))}$ , which is specifically expressed as:

$$n_{HARQ-ACK,part1\ (G-RNTI(i))} = \left(\left(V_{DAI,m_{last(i)}}^{DL} - \sum_{c=0}^{N_{cells}^{DL}-1} U_{DAI,c(i)}\right) \mod(T_D)\right) N_{TB,max}^{DL}$$

Where $V_{DAI,m_{last(i)}}^{DL}$ represents a DAI parameter of the last DCI of the multicast service (i); $U_{DAI,c(i)}$ represents the number of DCIs of the multicast service (i) received by the UE, when no related DCI scheduling information of the multicast service (i) is received, the related parameters are all 0; $N_{cells}^{DL}$ represents the number of cells in which the UE receives scheduling data; $T_D$ represents the maximum count value of the counter DAI; and $N_{TB,max}^{DL}$ represents the first multicast configuration information. When the base station configures DCI to schedule a maximum codeword 2, that is, scheduling 2 transport blocks, and needs to feedback 2-bit information, $N_{TB,max\ (unicast)}^{DL} = 2$, otherwise, $N_{TB,max\ (unicast)}^{DL} = 1$ .

Mode (2): obtaining a product of a cycle number of DAI of a target multicast service and a maximum count value of a counter DAI; obtaining a sum of the product and a DAI parameter of the last DCI received by the UE corresponding to the target multicast service, and subtracting the sum from the number of DCIs of the target multicast service received by the UE, thereby obtaining a first operation result; multiplying the first operation result with the first multicast configuration information, thereby obtaining the number of missed transport blocks corresponding to DCI missed by the UE in the target multicast service; where the target multicast service is any one of the N multicast services.

It is to be noted that, if the first multicast configuration information is 1, the step of "multiplying the first operation result with the first multicast configuration information" may be omitted.

For the mode (2), taking the target multicast service being a multicast service (i) as an example, the number of missed transport blocks corresponding to DCI missed by the UE in the multicast service (i) can be expressed by $n_{HARQ-ACK,part1\ (G-RNTI(i))}$ , which may be specifically expressed as:

$$n_{HARQ-ACK,part1\ (G-RNTI(i))} = \left(V_{DAI,m_{last(i)}}^{DL} + j(i) * T_D - \sum_{c=0}^{N_{cells}^{DL}-1} U_{DAI,c(i)}\right) N_{TB,max}^{DL}$$

Where j(i) represents the cycle number of DAI of the multicast service (i).

It is to be noted that, for the mode (1), the bit width of counter DAI is 2 bits, that is, the maximum counting range is $T_D$=4. When calculating the number of missed transport blocks corresponding to missed DCI, the method of the above mode (1) can be used to calculate modulo of $T_D$.

There are two main considerations as follows:

(1) When the number of DCIs transmitted by the base station is less than or equal to 11, the number of DCIs missed by the UE will not exceed 3.

(2) The result of the formula $V_{DAI,m_{last(i)}}^{DL} - \sum_{c=0}^{N_{cells}^{DL}-1} U_{DAI,c(i)}$ may be a negative value, and a result of a non-negative result can be calculated by using the modulo method.

When the UE supports multicast service scheduling, considering special reasons, such as: due to mobility, when the UE joins the HARQ process that is already in progress, the number of missed DCIs will exceed 3, then, the method of the above mode (2) can be used to calculate the number of missed transport blocks corresponding to the missed DCIs.

After determining the number of missed transport blocks corresponding to each multicast service through the above mode, the number of missed unicast transport blocks corresponding to DCI missed by the UE in the unicast service and the number of missed transport blocks corresponding to each multicast service are summed to obtain the total number of missed transport blocks.

Optionally, the determining the total number of reception transport blocks corresponding to the DCIs received by the UE in the unicast service and the multicast service according to the related parameters of the unicast and the related parameters of the multicast, may include: determining the total number of reception transport blocks, according to a total number of transport blocks of the unicast service and N multicast services received by the UE, and a total number of semi-persistently scheduled transport blocks of the unicast service and the multicast service.

In this embodiment, the number of reception transport blocks in the unicast service and the N multicast services may be jointly calculated. Specifically, the total number of reception transport blocks corresponding to the DCI received by the UE in the unicast service and the multicast service, is calculated as follows:

$$n_{HARQ-ACK,part2} = \sum_{c=0}^{N_{cells}^{DL}-1} \left( \sum_{m=0}^{M-1} N_{m,c}^{received} + N_{SPS,c} \right)$$

In the formula, $N_{m,c}^{received}$ represents the total number of transport blocks of the unicast service and the multicast service received by the UE; and $N_{SPS,c}$ represents the total number of semi-persistently scheduled transport blocks of the unicast service and the multicast service, that is, the number of SPS PDSCH transport blocks of unicast service and multicast service (PDSCH scheduling without PDCCH); M represents the number of detection opportunities of PDCCH.

The implementation process of determining the power control parameters of the PUCCH according to the manner 1 will be described hereinafter through a specific embodiment.

In this embodiment, the number of missed transport blocks of the unicast service and each multicast service are separately calculated; and the numbers of missed transport blocks corresponding to the unicast service and all multicast services are summed to obtain a total number of the missed transport blocks; and a total number of reception transport blocks corresponding to the unicast service and the N multicast services are jointly calculated. The total number of missed transport blocks and the total number of reception transport blocks are summed to obtain the power control parameter of the PUCCH, which can be expressed as:

$$n_{HARQ-ACK,TB} = n_{HARQ-ACK,part1} + \sum_{c=0}^{N_{cells}^{DL}-1} \left( \sum_{m=0}^{M-1} N_{m,c}^{received} + N_{SPS,c} \right)$$

Where $n_{HARQ-ACK,TB}$ represents the power control parameter of the PUCCH; $n_{HARQ-ACK,part1}$ represents the total number of missed transport blocks, and $\sum_{c=0}^{N_{cells}^{DL}-1}\left(\sum_{m=0}^{M-1} N_{m,c}^{received} + N_{SPS,c}\right)$ represents the total number of reception transport blocks. $n_{HARQ-ACK,part1} = n_{HARQ-ACK,part1(unicast)} + \sum_{i=0}^{N-1} n_{HARQ-ACK,part1(G-RNTI(i))}$, where $n_{HARQ-ACK,part1(unicast)}$ represents the number of missed unicast transport blocks of unicast service; $n_{HARQ-ACK,part1(G-RNTI(i))}$ represents the number of missed transport blocks of multicast service (i); and N represents a total number of multicast services.

$$n_{\text{HARQ-ACK,part1(unicast)}}$$

$$= \left(\left(\left(V^{\text{DL}}_{\text{DAI},m_{\text{last (unicast)}}} - \sum_{c=0}^{N^{\text{DL}}_{\text{cells}}-1} U_{\text{DAI,c (unicast)}}\right) \text{mod}(T_D)\right) N^{\text{DL}}_{\text{TB,max (unicast)}}\right)$$

Where the parameters in the above formula are related parameters for the unicast service, that is, the calculation of the parameters in the formula only calculates scheduling signaling and transport blocks related to the unicast service. $V^{\text{DL}}_{\text{DAI},m_{\text{last (unicast)}}}$ represents a DAI parameter of the last DCI in the unicast DCI; $U_{\text{DAI,c (unicast)}}$ represents the number of unicast DCI received by the UE (that is, the number of scheduling signaling), when no related DCI scheduling information of the unicast is received, the related parameters are all 0; $T_D$ represents the maximum count value of counter DAI; $N^{\text{DL}}_{\text{cells}} - 1$ represents the number of cells configured by the base station for UE to receive scheduling data. $N^{\text{DL}}_{\text{TB,max (unicast)}}$ represents unicast configuration information, where when the base station configures DCI to schedule a maximum codeword 2, that is, scheduling 2 transport blocks (or codewords of 2) and needs to feedback 2-bit information, $N^{\text{DL}}_{\text{TB,max (unicast)}} = 2$, otherwise, $N^{\text{DL}}_{\text{TB,max (unicast)}} = 1$.

$$n_{\text{HARQ-ACK,part1(G-RNTI(i))}} = \left(\left(\left(V^{\text{DL}}_{\text{DAI},m_{\text{last(i)}}} - \sum_{c=0}^{N^{\text{DL}}_{\text{cells}}-1} U_{\text{DAI,c(i)}}\right) \text{mod}(T_D)\right) N^{\text{DL}}_{\text{TB,max}}\right)$$

Where the parameters in the above formula are all for a certain multicast service identifier G-RNTI, that is, the above parameters are all related parameters for the multicast service (i). The meanings of parameters are the same as those in the first and second modes, and will not be repeated here.

It is to be noted that in this embodiment, for transmission of broadcast-multicast service, the base station usually will not use one DCI to schedule two codewords, that is, configuring or by default, $N^{\text{DL}}_{\text{TB,max}} = 1$, at this point, for the dynamic HARQ-ACK codebook, $n_{\text{HARQ-ACK,TB (G-RNTI(i))}}$ is equal to the bit number of HARQ-ACK sub-codebook of the multicast service (i) fed back by the UE corresponding to the multicast service (i) on a PUCCH, that is, $n_{\text{HARQ-ACK,TB (G-RNTI(i))}} = O_{\text{ACK(G-RNIT(i))}}$, where $O_{\text{ACK(G-RNIT(i))}}$ is the length of the sub-codebook corresponding to the multicast service (i).

Optionally, when the UE supports multicast service scheduling, considering special reasons, such as: due to mobility, when the UE joins the HARQ process that is already in progress, the number of missed DCIs will exceed 3, then, in the above formula for calculation $n_{\text{HARQ-ACK,TB (G-RNTI(i))}}$, the process of modulo calculation can be replaced with: $V^{\text{DL}}_{\text{DAI},m_{\text{last(i)}}} + j * T_D - \sum_{c=0}^{N^{\text{DL}}_{\text{cells}}-1} U_{\text{DAI,c(i)}}$; and then, after the foregoing replacement, one calculation method of $n_{\text{HARQ-ACK,part1(G-RNTI(i))}}$ is as follows:

$$n_{\text{HARQ-ACK,part1 (G-RNTI(i))}} = \left( V_{\text{DAI},m_{\text{last(i)}}}^{\text{DL}} + j(i) * T_D - \sum_{c=0}^{N_{\text{cells}}^{\text{DL}}-1} U_{\text{DAI},c(i)} \right) N_{\text{TB,max}}^{\text{DL}}$$

Where j(i) represents the cycle number of DAI of the multicast service (i).

Optionally, in this embodiment, when the multicast service is configured with semi-persistent scheduling, the HARQ-ACK feedback information length of semi-persistent scheduling of the multicast and unicast can be calculated together into the HARQ-ACK codebook of the unicast service; that is, when calculating the power control parameter of the unicast, a total number of the semi-persistently scheduled transport blocks of unicast and multicast are included. At this point, when calculating the HARQ codebook of multicast, the HARQ-ACK feedback length of semi-persistent scheduling of multicast is no longer included; that is, when calculating the power control parameters of the multicast, the number of semi-persistently scheduled transport blocks of the multicast is no longer included.

Optionally, if the semi-persistently scheduled transport blocks of multicast services are not included in the calculation of the power control parameters of unicast services, in addition to calculating dynamic schedule-based transport blocks and corresponding HARQ-ACK feedback, it is further necessary to calculate the HARQ-ACK feedback length of the semi-persistent scheduling of multicast; that is, when calculating the power control parameters of multicast, it is necessary to calculate the dynamic scheduled and semi-persistently scheduled transport blocks of multicast.

In the embodiment of the manner 1, the number of missed transport blocks of the unicast service and each multicast service are separately determined, and the numbers of missed transport blocks corresponding to the unicast service and all multicast services are summed to obtain the total number of missed transport blocks; for the part2 (that is, the total number of reception transport blocks), the total number of reception transport blocks are jointly calculated and the calculation process is simple.

Optionally, for the manner 2, the number of missed transport blocks of the unicast service is independently determined, and the number of missed transport blocks of the N multicast services are jointly determined, and then the numbers of missed transport blocks corresponding to the unicast service and the N multicast services are summed to obtain the total number of missed transport blocks.

Specifically, the step 41 may include:

Step 511: according to the related parameters of unicast, determining the number of missed unicast transport blocks corresponding to DCI missed by the UE in the unicast service;

Step 512: according to the related parameters of multicast, determining the number of missed multicast transport blocks corresponding to DCI missed by the UE in the N multicast services, where the number of missed multicast transport blocks is a total number of transport blocks missed by the UE in the N multicast services;

Step 513: determining the total number of missed transport blocks according to the number of missed unicast transport blocks and the number of missed multicast transport blocks.

The determining the total number of missed transport blocks according to the number of missed unicast transport blocks and the number of missed multicast transport blocks, includes:

summing the number of missed unicast transport blocks and the number of missed multicast transport blocks to obtain the total number of missed transport blocks. That is, the total number $n_{\text{HARQ-ACK,part1}}$ of missed transport blocks is calculated as follows:

$$n_{\text{HARQ-ACK,part1}} = n_{\text{HARQ-ACK,part1(unicast)}} + n_{\text{HARQ-ACK,part1(G-RNTI)}}$$

$n_{\text{HARQ-ACK,part1(unicast)}}$ represents the number of missed unicast transport blocks of unicast services; $n_{\text{HARQ-ACK,part1(G-RNTI)}}$ represents the total number of missed transport blocks of N multicast services.

Optionally, in the above step 512, determining the number of missed multicast transport blocks corresponding to DCI missed by the UE in the N multicast services, may include the following two modes:

Mode (i): subtracting a sum of DAI parameters of the last DCIs corresponding to the N multicast services from a sum of numbers of DCIs of the N multicast services received by the UE, thereby obtaining a total number of DCIs missed by the UE; performing a modulo operation on the total number of DCIs missed by the UE and a maximum count value of the counter DAI, thereby obtain an operation result, and multiplying the operation result with first multicast configuration information to obtain the number of missed multicast transport blocks corresponding to DCIs missed by the UE in the N multicast service.

For the mode (i), the total number of missed transport blocks of the UE in the N multicast service can be

expressed with $n_{\text{HARQ-ACK,part1 (G-RNTI)}}$ , which is specifically expressed as:

$$n_{\text{HARQ-ACK,part1 (G-RNTI)}} = \left( \left( \left( \sum_{i=0}^{N-1} V_{\text{DAI,m}_{\text{last(i)}}}^{\text{DL}} - \sum_{c=0}^{N_{\text{cells}}^{\text{DL}}-1} U_{\text{DAI,c}} \right) \bmod(T_D) \right) N_{\text{TB,max}}^{\text{DL}} \right)$$

Where $V_{\text{DAI,m}_{\text{last(i)}}}^{\text{DL}}$ represents a DAI parameter of the last DCI of the multicast service (i); $\sum_{i=0}^{N-1} V_{\text{DAI,m}_{\text{last(i)}}}^{\text{DL}}$ represents a sum of DAI parameters of last DCIs corresponding to N multicast services; N represents a multicast service scheduling identifier which is configured by the base station and needs to feedback HARQ-ACK, that is, a total number of multicast services. In this formula, $U_{\text{DAI,c}}$ represents the total number of DCIs of N multicast services (that is, the number of all multicast service scheduling signaling received by the UE), and when no DCI scheduling information related to any specific multicast service is received, the related parameters are all 0. $T_D$ represents the maximum count value of counter DAI. $N_{\text{TB,max}}^{\text{DL}}$ represents the first multicast configuration information. When the base station configures DCI to schedule a maximum codeword 2, that is, scheduling 2 transport blocks and needs to feedback 2-bit information, $N_{\text{TB,max (unicast)}}^{\text{DL}} = 2$ , otherwise, $N_{\text{TB,max (unicast)}}^{\text{DL}} = 1$ .

Mode (ii): obtaining a product of a cycle number of DAI of a target multicast service and a maximum count value of a counter DAI; obtaining a sum of the product and the number of DCIs of the target multicast service received by the UE, thereby obtaining a second operation result; obtaining a sum of second operation results corresponding to the N multicast services, and subtracting the sum of the second operation results from the sum of the DCIs of the N multicast services received by the UE to obtain a third operation result; multiplying the third operation result with the first multicast configuration information, thereby obtaining the number of missed transport blocks corresponding to DCIs missed by the UE in the N multicast service.

For the mode (ii), the total number of missed transport blocks of the UE in the N multicast services can be expressed by $n_{\text{HARQ-ACK,part1 (G-RNTI)}}$ , which may be specifically expressed as:

$$n_{\text{HARQ-ACK,part1 (G-RNTI)}} = \left( \left( \left( \sum_{i=0}^{N-1} (V_{\text{DAI,m}_{\text{last(i)}}}^{\text{DL}} + j(i) * T_D) - \sum_{c=0}^{N_{\text{cells}}^{\text{DL}}-1} U_{\text{DAI,c}} \right) \bmod(T_D) \right) N_{\text{TB,max}}^{\text{DL}} \right)$$

In the formula, j(i) represents the cycle number of DAI of the multicast service (i).

It is to be noted that, for the mode (i), the bit width of counter DAI is 2 bits, that is, the maximum counting range is $T_D$=4. When calculating the number of missed transport blocks corresponding to missed DCI, the method of the above mode (i) can be used to calculate modulo of $T_D$.

There are two main considerations as follows:

(1) When the number of DCIs transmitted by the base station is less than or equal to 11, the number of DCIs missed by the UE will not exceed 3.

(2) The result of the formula $V_{\text{DAI,m}_{\text{last(i)}}}^{\text{DL}} - \sum_{c=0}^{N_{\text{cells}}^{\text{DL}}-1} U_{\text{DAI,c}}$ may be a negative value, and a result of a non-negative number can be calculated by using the modulo method.

When the UE supports multicast service scheduling, considering special reasons, such as: due to mobility, when the UE joins the HARQ process that is already in progress, the number of missed DCIs will exceed 3, then, the method of the above mode (ii) can be used to calculate the number of missed transport blocks corresponding to the missed DCIs.

After determining, in the above mode, the number of missed multicast transport blocks corresponding to the DCIs missed by the UE in the N multicast services, the number of missed unicast transport blocks corresponding to DCIs missed by the UE in the unicast service in step 511 and the number of missed multicast transport blocks corresponding to the DCIs missed by the UE in the N multicast services are summed to obtain the total number of missed transport blocks.

Optionally, the determining the total number of reception transport blocks corresponding to DCIs received by the UE in the unicast service and the multicast service according to the related parameters of the unicast and the related parameters of the multicast, may include: according to the total number of transport blocks of the unicast service and N multicast services received by the UE, and the total number of semi-persistently scheduled transport blocks of the unicast service and the multicast services, determining the total number of reception transport blocks.

The implementation process of determining the power control parameters of the PUCCH according to the manner 1 will be described hereinafter through a specific embodiment.

In this embodiment, the number of missed unicast transport blocks of the unicast service is independently determined, and the number of missed multicast transport blocks of the N multicast services are jointly determined, and then the numbers of missed unicast transport blocks and the number of missed multicast transport blocks are summed to obtain the total number of missed transport blocks; and a total number of reception transport blocks corresponding to the unicast service and the N multicast services are jointly calculated. The total number of missed transport blocks and the total number of reception transport blocks are summed to obtain the power control parameter of the PUCCH, which can be expressed as:

$$n_{\text{HARQ-ACK,TB}} = n_{\text{HARQ-ACK,part1}} + \sum_{c=0}^{N_{\text{cells}}^{\text{DL}}-1} \left( \sum_{m=0}^{M-1} N_{m,c}^{\text{received}} + N_{\text{SPS},c} \right)$$

Where $n_{\text{HARQ-ACK,TB}}$ represents the power control parameter of the PUCCH; $n_{\text{HARQ-ACK,part1}}$ represents the total number of missed transport blocks, and $\sum_{c=0}^{N_{\text{cells}}^{\text{DL}}-1} \left( \sum_{m=0}^{M-1} N_{m,c}^{\text{received}} + N_{\text{SPS},c} \right)$ represents the total number of reception transport blocks.

$n_{\text{HARQ-ACK,part1}} = n_{\text{HARQ-ACK,part1(unicast)}} + n_{\text{HARQ-ACK,part1(G-RNTI)}}$, where $n_{\text{HARQ-ACK,part1(unicast)}}$ represents the number of missed unicast transport blocks of unicast service; $n_{\text{HARQ-ACK,part1(G-RNTI)}}$ represents the number of missed multicast transport blocks of all multicast services.

$$n_{\text{HARQ-ACK,part1(unicast)}}$$

$$= \left( \left( V_{\text{DAI,m}_{\text{last (unicast)}}}^{\text{DL}} - \sum_{c=0}^{N_{\text{cells}}^{\text{DL}}-1} U_{\text{DAI,c (unicast)}} \right) \bmod(T_D) \right) N_{\text{TB,max (unicast)}}^{\text{DL}}$$

Where the parameters in the above formula are related parameters for the unicast service, that is, the calculation of the parameters in the formula only calculates scheduling signaling and transport blocks related to the unicast service.

$V_{\text{DAI,m}_{\text{last (unicast)}}}^{\text{DL}}$ represents a DAI parameter of the last DCI in the unicast DCI; $U_{\text{DAI,c (unicast)}}$ represents the number of unicast DCI received by the UE (that is, the number of scheduling signaling), when no related DCI scheduling information of the unicast is received, the related parameters are all 0; $T_D$ represents the maximum count value of counter DAI;

$N_{\text{cells}}^{\text{DL}} - 1$ represents the number of cells configured by the base station for UE to receive scheduling data.

$N_{TB,max}^{DL}\ (unicast)$ represents unicast configuration information, where when the base station configures DCI to schedule a maximum codeword 2, that is, scheduling 2 transport blocks (or codewords of 2) and needs to feedback 2-bit information, $N_{TB,max}^{DL}\ (unicast)$, otherwise, $N_{TB,max}^{DL}\ (unicast) = 1$.

$$n_{HARQ\text{-}ACK,part1(G\text{-}RNTI)} = \left( \left( \sum_{i=0}^{N-1} V_{DAI,m_{last(i)}}^{DL} - \sum_{c=0}^{N_{cells}^{DL}-1} U_{DAI,c} \right) mod(T_D) \right) N_{TB,max}^{DL}$$

Where the parameters in the above formula are all for a certain multicast service identifier G-RNTI, that is, the above parameters are all related parameters for the multicast service. The meanings of parameters are the same as those in the modes (i) and (ii), and will not be repeated here.

It is to be noted that in this embodiment, for transmission of broadcast-multicast service, the base station usually will not use one DCI to schedule two codewords, that is, configuring or by default, $N_{TB,max}^{DL} = 1$, at this point, for the dynamic HARQ-ACK codebook, $n_{HARQ\text{-}ACK,TB\ (G\text{-}RNTI(i))}$ is equal to the bit number of HARQ-ACK sub-codebook of the multicast service (i) fed back by the UE corresponding to the multicast service (i) on a PUCCH, that is, $n_{HARQ\text{-}ACK,TB\ (G\text{-}RNTI(i))} = O_{ACK(G\text{-}RNIT(i))}$, where $O_{ACK(G\text{-}RNIT(i))}$ is the length of the sub-codebook corresponding to the multicast service (i). Then, the number $n_{HARQ\text{-}ACK,part1(G\text{-}RNTI)}$ of missed multicast transport blocks of all multicast services is: $n_{HARQ\text{-}ACK,TB\ (G\text{-}RNTI))} = \sum_{i=0}^{N-1} O_{ACK(G\text{-}RNIT(i))}$.

Optionally, when the UE supports multicast service scheduling, considering special reasons, such as: due to mobility, when the UE joins the HARQ process that is already in progress, the number of missed DCIs will exceed 3, then, the above calculation formula of $n_{HARQ\text{-}ACK,part1(G\text{-}RNTI)}$ can be replaced with:

$$n_{HARQ\text{-}ACK,part1(G\text{-}RNTI)}$$

$$= \left( \left( \sum_{i=0}^{N-1} (V_{DAI,m_{last(i)}}^{DL} + j(i) * T_D) - \sum_{c=0}^{N_{cells}^{DL}-1} U_{DAI,c} \right) mod(T_D) \right) N_{TB,max}^{DL}$$

Where j(i) represents the cycle number of DAI of the multicast service (i).

Optionally, in this embodiment, when the multicast service is configured with semi-persistent scheduling, the HARQ-ACK feedback information length of semi-persistent scheduling of the multicast and unicast can be calculated together into the HARQ-ACK codebook of the unicast service; that is, when calculating the power control parameter of the unicast, a total number of the semi-persistently scheduled transport blocks of unicast and multicast are included. At this point, when calculating the HARQ codebook of multicast, the HARQ-ACK feedback length of semi-persistent scheduling of multicast is no longer included; that is, when calculating the power control parameters of the multicast, the number of semi-persistently scheduled transport blocks of the multicast is no longer included.

If the semi-persistently scheduled transport blocks of multicast services are not included in the calculation of the power control parameters of unicast services, in addition to calculating dynamic schedule-based transport blocks and corresponding HARQ-ACK feedback, it is further necessary to calculate the HARQ-ACK feedback length of the semi-persistent scheduling of multicast; that is, when calculating the power control parameters of multicast, it is necessary to calculate the dynamic scheduled and semi-persistently scheduled transport blocks of multicast.

In the embodiment of the manner 2, the number of missed transport blocks of the unicast service is independently determined, and the number of missed transport blocks of the N multicast services are jointly determined, and then the numbers of missed transport blocks corresponding to the unicast service and the N multicast services are summed to obtain the total number of missed transport blocks. For the part2 (that is, the total number of reception transport blocks), the total number of reception transport blocks are jointly calculated, and thus the number of parameters that need to be calculated separately is reduced, and the calculation process is simple.

Optionally, for the manner 3, the total number of missed transport blocks of the unicast service and N multicast services are jointly determined, and the total number of reception transport blocks are also jointly determined. That is,

$$n_{\text{HARQ-ACK,TB}} = n_{\text{HARQ-ACK,part1}} + \sum_{c=0}^{N_{\text{cells}}^{\text{DL}}-1} \left( \sum_{m=0}^{M-1} N_{m,c}^{\text{received}} + N_{\text{SPS},c} \right)$$

Where $n_{\text{HARQ-ACK,TB}}$ represents the power control parameter of the PUCCH; $n_{\text{HARQ-ACK,part1}}$ represents the total number of missed transport blocks, and $\sum_{c=0}^{N_{\text{cells}}^{\text{DL}}-1} \left( \sum_{m=0}^{M-1} N_{m,c}^{\text{received}} + N_{\text{SPS},c} \right)$ represents the total number of reception transport blocks.

Specifically, the calculating the total number of missed transport blocks in the step 41 may include the following two modes:

Mode (a): obtaining a sum of the DAI parameter of the last DCI in the DCIs of the unicast service and DAI parameters of the last DCIs corresponding to the N multicast services, subtracting the sum from the total number of DCIs received by the UE to obtain a total number of DCIs missed by the UE; performing a modulo operation on the total number of DCIs missed by the UE and a maximum count value of the counter DAI, thereby obtain an operation result, and multiplying the operation result with first multicast configuration information to obtain the total number of missed transport blocks corresponding to DCIs missed by the UE in unicast services and N multicast services. One calculation formula of the total number $n_{\text{HARQ-ACK,part1}}$ of missed transport block is as follows:

$$n_{\text{HARQ-ACK,part1}} = \left( \left( V_{\text{DAI},m_{\text{last(unicast)}}}^{\text{DL}} + \sum_{i=0}^{N-1} V_{\text{DAI},m_{\text{last(i)}}}^{\text{DL}} - \sum_{c=0}^{N_{\text{cells}}^{\text{DL}}-1} U_{\text{DAI},c} \right) \mod(T_{\text{D}}) \right) N_{\text{TB,max}}^{\text{DL}}$$

Where $V_{\text{DAI},m_{\text{last(unicast)}}}^{\text{DL}}$ represents a DAI parameter of the last DCI of the unicast DCIs; $V_{\text{DAI},m_{\text{last(i)}}}^{\text{DL}}$ represents a DAI parameter of the last DCI of the multicast service (i); $U_{\text{DAI},c}$ represents a total number of DCIs received by the UE in unicast services and N multicast services; $N_{\text{TB,max}}^{\text{DL}}$ represents first multicast configuration information. When the base station configures DCI to schedule a maximum codeword 2, that is, scheduling 2 transport blocks and needs to feedback 2-bit information, $N_{\text{TB,max (unicast)}}^{\text{DL}} = 2$, otherwise, $N_{\text{TB,max (unicast)}}^{\text{DL}} = 1$.

Optionally, when the UE supports multicast service scheduling, considering special reasons, such as: due to mobility, when the UE joins the HARQ process that is already in progress, the number of missed DCIs will exceed 3, then, the following mode (b) can be used to calculate the total number of missed transport blocks.

Mode (b): according to the related parameters of the unicast and the related parameters of the multicast, determining the total number of missed transport blocks corresponding to DCIs missed by the UE in the unicast service and N multicast services, includes:

calculating the total number of missed transport blocks through the following formula:

$$n_{\text{HARQ-ACK,part1}} = \left(\left(\left(V_{\text{DAI},m_{\text{last(Unicast)}}}^{\text{DL}} + j(\text{unicast}) * T_D + \sum_{i=0}^{N-1}(V_{\text{DAI},m_{\text{last(i)}}}^{\text{DL}} + j(i) * T_D)\right.\right.\right.$$

$$\left.\left.\left. - \sum_{c=0}^{N_{\text{cells}}^{\text{DL}}-1} U_{\text{DAI},c}\right)\bmod(T_D)\right)N_{\text{TB,max}}^{\text{DL}}\right.$$

where $n_{\text{HARQ-ACK,part1}}$ represents the total number of missed transport blocks; $V_{\text{DAI},m_{\text{last(unicast)}}}^{\text{DL}}$ represents the DAI parameter of the last DCI in DCIs of the unicast service; $V_{\text{DAI},m_{\text{last(i)}}}^{\text{DL}}$ represents the DAI parameter of the last DCI in the DCIs of the multicast service (i); j(unicast) represents the cycle number of DAIs for unicast services; j (i) represents the cycle number of DAIs for multicast services (i); $T_D$ represents the maximum count value of counter DAI; $U_{\text{DAI},c}$ represents the total number of DCIs of the unicast service and all multicast services, received by the UE; $N_{\text{TB,max}}^{\text{DL}}$ represents the first multicast configuration information; $N_{\text{cells}}^{\text{DL}}$ represents the number of cells in which the UE receives scheduling data; N represents the number of broadcast-multicast services that need to be fed back HARQ-ACK indicated by the base station, that is, the total number of multicast services.

Optionally, the determining the total number of reception transport blocks corresponding to the DCIs received by the UE in the unicast service and the multicast service according to the related parameters of the unicast and the related parameters of the multicast, includes: according to the total number of transport blocks of the unicast service and the N multicast services received by the UE, and the total number of semi-persistently scheduled transport blocks of the unicast service and the multicast service, determining the total number of reception transport blocks.

In this embodiment, the total number $n_{\text{HARQ-ACK,part2}}$ of reception transport blocks is calculated as follows

$$n_{\text{HARQ-ACK,part2}} = \sum_{c=0}^{N_{\text{cells}}^{\text{DL}}-1}\left(\sum_{m=0}^{M-1} N_{m,c}^{\text{received}} + N_{\text{SPS},c}\right)$$

In the formula, $N_{m,c}^{\text{received}}$ represents the total number of transport blocks of the unicast service and the multicast service received by the UE; $N_{\text{SPS},c}$ represents the total number of semi-persistently scheduled transport blocks of the unicast service and the multicast service, that is, the number of SPS PDSCH transport blocks of unicast service and multicast service (PDSCH scheduling without PDCCH); M represents the number of detection opportunities of PDCCH.

For the embodiment of the manner 3, the total number of missed transport blocks of the unicast service and N multicast services are jointly determined, and the total number of reception transport blocks are also jointly determined, and thus the calculation process is simple, so that the UE can better perform power control to maximize power efficiency.

As an optional embodiment, in the embodiment of the present application, if the first multicast configuration information is 1, then the power control parameter of the target multicast service is: a bit number of HARQ-ACK sub-codebook of a target multicast service fed back by the UE corresponding to the target multicast service on a PUCCH.

The first multicast configuration information is $N_{\text{TB,max}}^{\text{DL}}$, that is, if $N_{\text{TB,max}}^{\text{DL}} = 1$, then the power control parameter of the target multicast service is: a bit number of HARQ-ACK sub-codebook of a target multicast service fed back by the UE corresponding to the target multicast service on a PUCCH.

Optionally, the number of semi-persistently scheduled transport blocks of the target multicast service is included in the bit number of the HARQ-ACK sub-codebook of the target multicast service;

or

the number of semi-persistently scheduled transport blocks of the target multicast service is included in the bit number of the HARQ-ACK sub-codebook of the unicast service.

In this embodiment, when the multicast service is configured with semi-persistent scheduling, the HARQ-ACK feedback information length of semi-persistent scheduling of the multicast and unicast can be calculated together into the HARQ-ACK codebook of the unicast service; that is, when calculating the power control parameter of the unicast, the semi-persistently scheduled transport blocks of unicast and multicast are included. At this point, when calculating the HARQ codebook of multicast, the HARQ-ACK feedback length of semi-persistent scheduling of multicast is no longer included; that is, when calculating the power control parameters of the multicast, the number of semi-persistently scheduled transport blocks of the multicast is no longer included. If the semi-persistently scheduled transport blocks of multicast services are not included in the calculation of the power control parameters of unicast services, in addition to calculating dynamic schedule-based transport blocks and corresponding HARQ-ACK feedback, it is further necessary to calculate the HARQ-ACK feedback length of the semi-persistent scheduling of multicast; that is, when calculating the power control parameters of multicast, it is necessary to calculate the dynamic scheduled and semi-persistently scheduled transport blocks of multicast.

In this embodiment, the number of semi-persistently scheduled transport blocks of the target multicast service may be included in the bit number of HARQ-ACK sub-codebook of the target multicast service, or may be included in the bit number of HARQ sub-codebook of the unicast service. If the semi-persistently scheduled transport blocks of multicast services are not included in the calculation of the power control parameters of unicast services, when calculating the power control parameter of the target multicast service, SPS data blocks of the target multicast service need to be included, that is, $n_{\text{HARQ-ACK,TB (G-RNTI(i))}}$ is equal to a sum of a bit number of HARQ-ACK sub-codebook of a multicast service (i) fed back on a PUCCH and the number of semi-persistently scheduled transport blocks (that is, the number of SPS data transport blocks) of the multicast service (i), which can be expressed as:

$$n_{\text{HARQ-ACK,TB (G-RNTI(i))}} = O_{\text{ACK(G-RNIT(i))}} + \sum_{c=0}^{N_{\text{cells}}^{\text{DL}}-1} N_{\text{SPS,c(i)}}$$

If all semi-persistently scheduled transport blocks (unicast pus multicast) are included in the calculation of the power control parameters of the unicast service, when calculating the power control parameters of the target multicast service, it is not needed to include the SPS data blocks of the target multicast service.

In the embodiment of the present disclosure, the UE determines the power control parameter of the PUCCH used to transmit the broadcast-multicast HARQ-ACK codebook according to the related parameters of the unicast and the related parameters of the multicast, so that the UE can perform better power control, thereby maximizing the power efficiency, which not only meets requirements of transmission power of PUCCH, but also saves power.

The above embodiment introduces the power control parameter determining method of the present disclosure, and the following embodiment will further describe the corresponding device with reference to the accompanying drawings.

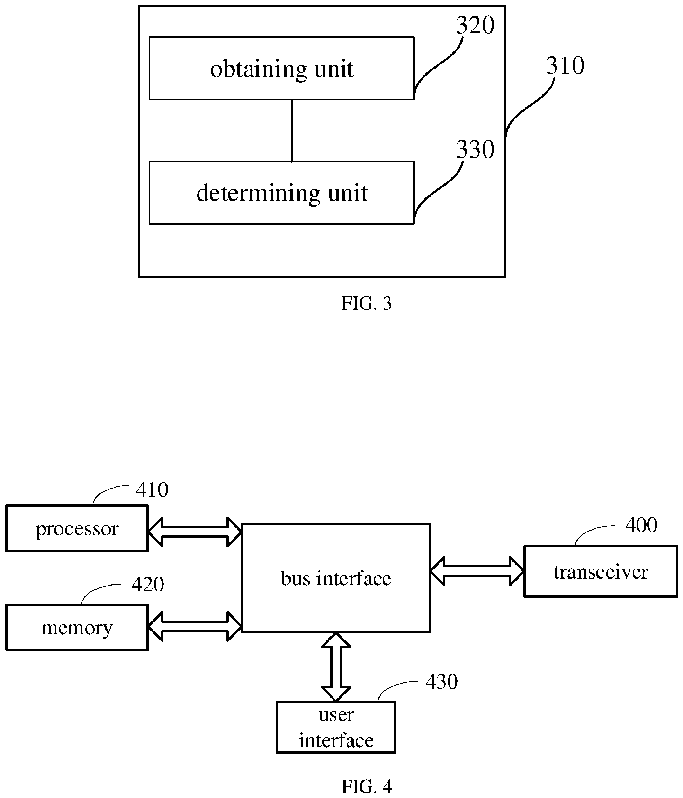

Specifically, as shown in FIG. 3, one embodiment of the present disclosure provides a power control parameter determining device 310, which is applied to a terminal, including:

an obtaining unit 320 configured to obtain related parameters of unicast and related parameters of multicast;
a determining unit 330 configured to determine a power control parameter of physical uplink control channel (PUCCH) according to the related parameters of the unicast and the related parameters of the multicast.

Optionally, the related parameters of the multicast include at least one of the following:

downlink assignment index (DAI) parameter of a last DCI in downlink control information (DCI) of multicast;
the number of DCIs of multicast received by the UE;
the number of transport blocks of multicast received by the UE;
the number of semi-persistently scheduled transport blocks of multicast received by the UE.

Optionally, the determining unit includes:

a first determining subunit configured to determine a first power control parameter of a unicast service according to the related parameters of the unicast;

a second determining subunit configured to determine a second power control parameter of N multicast services, according to related parameters of the multicast, where N is an integer greater than or equal to 1;
a third determining subunit configured to determine the power control parameter of the PUCCH according to the first power parameter and the second power parameter.

Optionally, the second determining subunit is specifically configured to:

according to the related parameters of the multicast, respectively determine the number of missed transport blocks corresponding to DCI missed by the UE in each multicast service;
according to the related parameters of the multicast, respectively determine the number of reception transport blocks corresponding to DCI received by the UE in each multicast service;
according to the number of missed transport blocks and the number of reception transport blocks, determine the second power control parameter of the N multicast services.

Optionally, when respectively determining the number of reception transport blocks corresponding to DCI received by the UE in each multicast service according to the related parameters of the multicast, the second determining subunit is specifically configured to:
obtain a sum of the number of transport blocks of the target multicast service received by the UE and the number of semi-persistently scheduled transport blocks of the target multicast service, thereby determining the number of reception transport blocks corresponding to DCI received by the UE in the target multicast service; where the target multicast service is any one of the N multicast services.

Optionally, the third determining subunit is specifically configured to:

obtain a sum of the first power control parameter and the N second power control parameters to obtain the power control parameter of the PUCCH, which can be expressed with the following formula:

$$n_{\text{HARQ-ACK,TB}} = n_{\text{HARQ-ACK,TB(unicast)}} + \sum_{i=0}^{N-1} n_{\text{HARQ-ACK,TB(G-RNTI(i))}}$$

where $n_{\text{HARQ-ACK,TB}}$ represents the power control parameter of the PUCCH; $n_{\text{HARQ-ACK,TB(unicast)}}$ represents the first power parameter of the unicast service; $n_{\text{HARQ-ACK,TB(G-RNTi(i))}}$ represents the second power parameter of the multicast service (i); N represents the total number of multicast services.

Optionally, the second power control parameter $n_{\text{HARQ-ACK,TB (G-RNTI(i))}}$ is equal to the bit number of HARQ-ACK sub-codebook of the multicast service (i) fed back by the UE corresponding to the multicast service (i) on a PUCCH.

Optionally, the calculation formula of the second power control parameter is as follows:

$$n_{\text{HARQ-ACK,TB (G-RNTI(i))}}$$

$$= \left( \left( V_{\text{DAI},m_{\text{last}(i)}}^{\text{DL}} - \sum_{c=0}^{N_{\text{cells}}^{\text{DL}}-1} U_{\text{DAI},c(i)} \right) \bmod(T_D) \right) N_{\text{TB,max}}^{\text{DL}}$$

$$+ \sum_{c=0}^{N_{\text{cells}}^{\text{DL}}-1} \left( \sum_{m=0}^{M-1} N_{m,c(i)}^{\text{received}} + N_{\text{SPS},c(i)} \right)$$

Where $n_{\text{HARQ-ACK,TB (G-RNTI(i))}}$ represents the second power control parameter of the multicast service (i); $V_{\text{DAI},m_{\text{last}(i)}}^{\text{DL}}$ represents a DAI parameter of the last DCI of the multicast service (i); $U_{\text{DAI},c(i)}$ represents the number of DCIs of the multicast service (i) received by the UE; $N_{cells}^{DL}$ represents the number of cells in which the UE receives scheduling data; $T_D$ represents the maximum count value of counter DAI; $N_{TB,max}^{DL}$ represents the first multicast configuration information; $N_{m,c(i)}^{received}$ represents the number of transport blocks of the multicast service (i) received by the UE; $N_{SPS,c(i)}$ represents the number of semi-persistently scheduled transport blocks of the multicast service (i); M represents the number of the physical downlink control channel (PDCCH) detection opportunities.

Optionally, the value of $N_{TB,max}^{DL}$ is configured or defaults to 1.

Optionally, the determining unit includes:

a fourth determining subunit configured to determine a total number of missed transport blocks corresponding to missed DCIs of the UE in the unicast service and N multicast services according to the related parameters of the unicast and the related parameters of the multicast, where N is an integer greater than or equal to 1;
a fifth determining subunit configured to determine a total number of reception transport blocks corresponding to the DCIs received by the UE in the unicast service and the multicast service according to the related parameters of the unicast and the related parameters of the multicast;
a sixth determining subunit configured to determine the power control parameters of the PUCCH according to the total number of missed transport blocks and the total number of reception transport blocks.

Optionally, the fourth determining subunit is specifically configured to:

according to the related parameters of the unicast, determine the number of missed unicast transport blocks corresponding to DCIs missed by the UE in the unicast service;
according to the related parameters of the multicast, respectively determine the number of missed transport blocks corresponding to DCIs missed by the UE in each multicast service;
determine the total number of missed transport blocks according to the number of missed unicast transport blocks and the number of missed transport blocks corresponding to each multicast service.

Optionally, when respectively determining the number of missed transport blocks corresponding to DCIs missed by the UE in each multicast service according to the related parameters of the multicast, the fourth determining subunit is specifically configured to:

subtract a DAI parameter of the last DCI corresponding to a target multicast service from the number of DCIs of the target multicast service received by the UE, thereby obtaining the number of DCIs missed by the UE in the target multicast service;
perform a modulo operation on the number of DCI missed by the UE and a maximum count value of the counter DAI, thereby obtain an operation result, and multiply the operation result with first multicast configuration information to obtain the number of missed transport blocks corresponding to DCI missed by the UE in the target multicast service; where the target multicast service is any one of the N multicast services.

Optionally, when respectively determining the number of missed transport blocks corresponding to DCIs missed by the UE in each multicast service according to the related parameters of the multicast, the fourth determining subunit is specifically configured to:

obtain a product of a cycle number of DAI of a target multicast service and a maximum count value of a counter DAI;
obtain a sum of the product and a DAI parameter of the last DCI received by the UE corresponding to the target multicast service, and subtract the sum from the number of DCIs of the target multicast service received by the UE, thereby obtaining a first operation result;
multiply the first operation result with the first multicast configuration information, thereby obtaining the number of missed transport blocks corresponding to DCI missed by the UE in the target multicast service; where the target multicast service is any one of the N multicast services.

Optionally, when determining the total number of missed transport blocks according to the number of missed unicast transport blocks and the number of missed transport blocks corresponding to each multicast service, the fourth determining subunit is specifically configured to:

obtain a sum of the number of missed transport blocks of the unicast and the number of missed transport blocks of N multicast services to obtain the total number of missed transport blocks.

Optionally, the fourth determining subunit is specifically configured to:

according to the related parameters of the unicast, determine the number of missed transport blocks of unicast corresponding to DCIs missed by the UE in the unicast service;

according to the related parameters of the multicast, determine the number of missed transport blocks of multicast corresponding to DCIs missed by the UE in the N multicast services, where the number of the missed transport blocks of multicast is the total number of transport blocks missed by the UE in the N multicast services;

according to the number of missed transport blocks of unicast and the number of missed transport blocks of multicast, determine the total number of missed transport blocks.

Optionally, when determining the number of missed transport blocks of multicast corresponding to DCIs missed by the UE in N multicast services according to the related parameters of multicast, the fourth determining subunit is specifically configured to:

subtract a sum of DAI parameters of the last DCIs corresponding to the N multicast services from a sum of numbers of DCIs of the N multicast services received by the UE, thereby obtaining a total number of DCIs missed by the UE;

perform a modulo operation on the total number of DCIs missed by the UE and a maximum count value of the counter DAI, thereby obtain an operation result, and multiply the operation result with first multicast configuration information to obtain the number of missed multicast transport blocks corresponding to DCIs missed by the UE in the N multicast services.

Optionally, when determining the number of missed transport blocks of multicast corresponding to DCIs missed by the UE in N multicast services according to multicast related parameters of multicast, the fourth determining subunit is specifically configured to:

obtain a product of a cycle number of DAI of a target multicast service and a maximum count value of a counter DAI;

obtain a sum of the product and the number of DCIs of the target multicast service received by the UE, thereby obtaining a second operation result;

obtain a sum of second operation results corresponding to the N multicast services, and subtract the sum of the second operation results from the sum of the DCIs of the N multicast services received by the UE to obtain a third operation result;

multiply the third operation result with the first multicast configuration information, thereby obtaining the number of missed transport blocks corresponding to DCIs missed by the UE in the N multicast service.

Optionally, when determining the total number of missed transport blocks according to the number of missed transport blocks of unicast and the number of missed transport blocks of multicast, the fourth determining subunit is specifically configured to:

obtain a sum of the number of missed transport blocks of unicast and the number of missed transport blocks of multicast to obtain the total number of missed transport blocks.

Optionally, if the first multicast configuration information is 1, then the power control parameter of the target multicast service is: a bit number of HARQ-ACK sub-codebook of a target multicast service fed back by the UE corresponding to the target multicast service on a PUCCH.

Optionally, the number of semi-persistently scheduled transport blocks of the target multicast service is included in the bit number of the HARQ-ACK sub-codebook of the target multicast service;

or

the number of semi-persistently scheduled transport blocks of the target multicast service is included in the bit number of the HARQ-ACK sub-codebook of the unicast service.

Optionally, the fourth determining subunit is specifically configured to:

obtain a sum of the DAI parameter of the last DCI in the DCIs of the unicast service and DAI parameters of the last DCIs corresponding to the N multicast services, subtract the sum from the total number of DCIs received by the UE to obtain a total number of DCIs missed by the UE;

perform a modulo operation on the total number of DCIs missed by the UE and a maximum count value of the counter DAI, thereby obtain an operation result, and multiply the operation result with first multicast configuration information to obtain the total number of missed transport blocks corresponding to DCIs missed by the UE in the unicast services and the N multicast services.

Optionally, the fourth determining subunit is specifically configured to:

calculate the total number of missed transport blocks through the following formula:

$$n_{\text{HARQ-ACK,part1}} = \left(\left(\left(V^{\text{DL}}_{\text{DAI},m_{\text{last(Unicast)}}} + j(\text{unicast}) * T_D + \sum_{i=0}^{N-1}(V^{\text{DL}}_{\text{DAI},m_{\text{last(i)}}} + j(i) * T_D) - \sum_{c=0}^{N^{\text{DL}}_{\text{cells}}-1} U_{\text{DAI},c}\right) \bmod(T_D)\right) N^{\text{DL}}_{\text{TB,max}}\right)$$

where $n_{\text{HARQ-ACK,part1}}$ represents the total number of missed transport blocks; $V^{\text{DL}}_{\text{DAI},m_{\text{last(unicast)}}}$ represents the DAI parameter of the last DCI in DCIs of the unicast service; $V^{\text{DL}}_{\text{DAI},m_{\text{last(i)}}}$ represents the DAI parameter of the last DCI in the DCIs of the multicast service (i); j(unicast) represents the cycle number of DAIs for unicast services; j (i) represents the cycle number of DAIs for multicast services (i); $T_D$ represents the maximum count value of counter DAI; $U_{\text{DAI},c}$ represents the total number of DCIs of the unicast service and all multicast services, received by the UE; $N^{\text{DL}}_{\text{TB,max}}$ represents the first multicast configuration information; $N^{\text{DL}}_{\text{cells}}$ represents the number of cells in which the UE receives scheduling data.

Optionally, the fifth determining subunit is specifically configured to:
determine the total number of reception transport blocks, according to the total number of transport blocks of the unicast service and N multicast services received by the UE, and the total number of semi-persistently scheduled transport blocks of the unicast service and the multicast service.

Optionally, the power control parameter of the PUCCH refers to a power control parameter that needs to feed back HARQ-ACK, and feedback of the HARQ-ACK is based on acknowledgment (ACK)/negative acknowledgment (NACK).

Optionally, the power control parameters of the PUCCH include:
related DCI and transport blocks for feedback that convert NACK-only to ACK/NACK.

In the embodiment of the present disclosure, the UE determines the power control parameter of the PUCCH used to transmit the broadcast-multicast HARQ-ACK codebook according to the related parameters of the unicast and the related parameters of the multicast, so that the UE can perform better power control, thereby maximizing the power efficiency, which not only meets requirements of transmission power of PUCCH, but also saves power.

It is to be noted here that the above device provided by the embodiment of the present disclosure can implement all the method steps implemented by the above method embodiment, and can achieve the same technical effect. The parts and beneficial effects in this embodiment that are the same as those in the method embodiment will not be described in detail here.

It is to be noted that division of units in the embodiment of the present disclosure is exemplary, and is only a logical function division, and there may be another division manner in actual implementation. In addition, each functional unit in each embodiment of the present application may be integrated into one processing unit, each unit may exist separately physically, or two or more units may be integrated into one unit. The foregoing integrated units may be implemented in the form of hardware or in the form of software functional units.

If the integrated units are realized in the form of software function units and sold or used as independent products, they may be stored in a processor-readable storage medium. Based on this understanding, the essence of the technical solution of the present disclosure or the part that contributes to the related art or the part of the technical solution may be embodied in the form of a software product. The computer software product is stored in a storage medium, includes several instructions which enables a computer device (which may be a personal computer, a server, or a network device, etc.) or a processor to execute all or part of the steps of the methods described in various embodiments of the present disclosure. The storage medium includes various media capable of storing program codes such as U disk, mobile hard disk, ROM, RAM, magnetic disk or optical disk.

As shown in FIG. 4, one embodiment of the present disclosure further provides a power control parameter determining device, which is applied to a user equipment (UE) and includes: a memory 420, a transceiver 400, and a processor 410. The memory 420 is used to store computer programs. The transceiver 400 is used to transmit and receive data under the control of the processor 410. The processor 410 is used to read the computer programs in the memory and perform the following operations:

obtaining related parameters of unicast and related parameters of multicast;
determining a power control parameter of physical uplink control channel (PUCCH) according to the related parameters of the unicast and the related parameters of the multicast.

Optionally, the related parameters of the multicast include at least one of the following:

downlink assignment index (DAI) parameter of a last DCI in downlink control information (DCI) of multicast;
the number of DCIs of multicast received by the UE;
the number of transport blocks of multicast received by the UE;
the number of semi-persistently scheduled transport blocks of multicast received by the UE.

Optionally, the processor is configured to read the computer program in the memory and perform the following operations:

determining a first power control parameter of a unicast service according to the related parameters of the unicast;
determining a second power control parameter of N multicast services, according to related multicast parameters, where N is an integer greater than or equal to 1;
determining the power control parameter of the PUCCH according to the first power parameter and the second power parameter.

Optionally, the processor is configured to read the computer program in the memory and perform the following operations:

according to the related parameters of the multicast, respectively determine the number of missed transport blocks corresponding to DCI missed by the UE in each multicast service;
according to the related parameters of the multicast, respectively determine the number of reception transport blocks corresponding to DCI received by the UE in each multicast service;
according to the number of missed transport blocks and the number of reception transport blocks, determine the second power control parameter of the N multicast services.

Optionally, the processor is configured to read the computer program in the memory and perform the following operations:
obtaining a sum of the number of transport blocks of the target multicast service received by the UE and the number of semi-persistently scheduled transport blocks of the target multicast service, thereby determining the number of reception transport blocks corresponding to DCI received by the UE in the target multicast service; where the target multicast service is any one of the N multicast services.
Optionally, the processor is configured to read the computer program in the memory and perform the following operations:

obtaining a sum of the first power control parameter and the N second power control parameters to obtain the power control parameter of the PUCCH, which can be expressed with the following formula:

$$n_{\text{HARQ-ACK,TB}} = n_{\text{HARQ-ACK,TB(unicast)}} + \sum_{i=0}^{N-1} n_{\text{HARQ-ACK,TB(G-RNTI(i))}}$$

where $n_{\text{HARQ-ACK,TB}}$ represents the power control parameter of the PUCCH; $n_{\text{HARQ-ACK,TB(unicast)}}$ represents the first power parameter of the unicast service; $n_{HARQ-ACK,TB(G-RNTi(i))}$ represents the second power parameter of the multicast (i); N represents the total number of multicast services.

Optionally, the second power control parameter $n_{HARQ-ACK,TB (G-RNTI(i))}$ is equal to the bit number of HARQ-ACK sub-codebook of the multicast service (i) fed back by the UE corresponding to the multicast service (i) on a PUCCH.

Optionally, the calculation formula of the second power control parameter is as follows:

$$n_{HARQ-ACK,TB\ (G-RNTI(i))}$$

$$= \left( \left( V_{DAI,m_{last(i)}}^{DL} - \sum_{c=0}^{N_{cells}^{DL}-1} U_{DAI,c(i)} \right) mod(T_D) \right) N_{TB,max}^{DL}$$

$$+ \sum_{c=0}^{N_{cells}^{DL}-1} \left( \sum_{m=0}^{M-1} N_{m,c(i)}^{received} + N_{SPS,c(i)} \right)$$

Where $n_{HARQ-ACK,TB\ (G-RNTI(i))}$ represents the second power control parameter of the multicast service (i); $V_{DAI,m_{last(i)}}^{DL}$ represents a DAI parameter of the last DCI of the multicast service (i); $U_{DAI,c(i)}$ represents the number of DCIs of the multicast service (i) received by the UE; $N_{cells}^{DL}$ represents the number of cells in which the UE receives scheduling data; $T_D$ represents the maximum count value of counter DAI; $N_{TB,max}^{DL}$ represents the first multicast configuration information; $N_{m,c(i)}^{received}$ represents the number of transport blocks of the multicast service (i) received by the UE; $N_{SPS,c(i)}$ represents the number of semi-persistently scheduled transport blocks of the multicast service (i); M represents the number of the physical downlink control channel (PDCCH) detection opportunities.

Optionally, the value of $N_{TB,max}^{DL}$ is configured or defaults to 1.

Optionally, the processor is configured to read the computer program in the memory and perform the following operations:

determining a total number of missed transport blocks corresponding to missed DCIs of the UE in the unicast service and N multicast services according to the related parameters of the unicast and the related parameters of the multicast, where N is an integer greater than or equal to 1;
determining a total number of reception transport blocks corresponding to the DCIs received by the UE in the unicast service and the multicast service according to the related parameters of the unicast and the related parameters of the multicast;
determining the power control parameters of the PUCCH according to the total number of missed transport blocks and the total number of reception transport blocks.

Optionally, the processor is configured to read the computer program in the memory and perform the following operations:

according to the related parameters of the unicast, determining the number of missed unicast transport blocks corresponding to DCIs missed by the UE in the unicast service;
according to the related parameters of the multicast, respectively determining the number of missed transport blocks corresponding to DCIs missed by the UE in each multicast service;
determining the total number of missed transport blocks according to the number of missed unicast transport blocks and the number of missed transport blocks corresponding to each multicast service.

Optionally, the processor is configured to read the computer program in the memory and perform the following operations:

subtracting a DAI parameter of the last DCI corresponding to a target multicast service from the number of DCIs of the target multicast service received by the UE, thereby obtaining the number of DCIs missed by the UE in the target multicast service;

performing a modulo operation on the number of DCI missed by the UE and a maximum count value of the counter DAI, thereby obtain an operation result, and multiply the operation result with first multicast configuration information to obtain the number of missed transport blocks corresponding to DCI missed by the UE in the target multicast service; where the target multicast service is any one of the N multicast services.

Optionally, the processor is configured to read the computer program in the memory and perform the following operations:

obtaining a product of a cycle number of DAI of a target multicast service and a maximum count value of a counter DAI;

obtaining a sum of the product and a DAI parameter of the last DCI received by the UE corresponding to the target multicast service, and subtracting the sum from the number of DCIs of the target multicast service received by the UE, thereby obtaining a first operation result;

multiplying the first operation result with the first multicast configuration information, thereby obtaining the number of missed transport blocks corresponding to DCI missed by the UE in the target multicast service; where the target multicast service is any one of the N multicast services.

Optionally, the processor is configured to read the computer program in the memory and perform the following operations:

obtaining a sum of the number of missed transport blocks of the unicast and the number of missed transport blocks of N multicast services to obtain the total number of missed transport blocks.

Optionally, the processor is configured to read the computer program in the memory and perform the following operations:

according to the related parameters of the unicast, determining the number of missed transport blocks of unicast corresponding to DCIs missed by the UE in the unicast service;

according to the related parameters of the multicast, determining the number of missed transport blocks of multicast corresponding to DCIs missed by the UE in the N multicast services, where the number of the missed transport blocks of multicast is the total number of transport blocks missed by the UE in the N multicast services;

according to the number of missed transport blocks of unicast and the number of missed transport blocks of multicast, determining the total number of missed transport blocks.

Optionally, the processor is configured to read the computer program in the memory and perform the following operations:

subtracting a sum of DAI parameters of the last DCIs corresponding to the N multicast services from a sum of numbers of DCIs of the N multicast services received by the UE, thereby obtaining a total number of DCIs missed by the UE;

performing a modulo operation on the total number of DCIs missed by the UE and a maximum count value of the counter DAI, thereby obtain an operation result, and multiplying the operation result with first multicast configuration information to obtain the number of missed multicast transport blocks corresponding to DCIs missed by the UE in the N multicast service.

Optionally, the processor is configured to read the computer program in the memory and perform the following operations:

obtaining a product of a cycle number of DAI of a target multicast service and a maximum count value of a counter DAI;

obtaining a sum of the product and the number of DCIs of the target multicast service received by the UE, thereby obtaining a second operation result;

obtaining a sum of second operation results corresponding to the N multicast services, and subtracting the sum of the second operation results from the sum of the DCIs of the N multicast services received by the UE to obtain a third operation result;

multiplying the third operation result with the first multicast configuration information, thereby obtaining the number of missed transport blocks corresponding to DCIs missed by the UE in the N multicast service.

Optionally, the processor is configured to read the computer program in the memory and perform the following operations:
obtaining a sum of the number of missed transport blocks of unicast and the number of missed transport blocks of multicast to obtain the total number of missed transport blocks.

Optionally, if the first multicast configuration information is 1, then the power control parameter of the target multicast service is: a bit number of HARQ-ACK sub-codebook of a target multicast service fed back by the UE corresponding to the target multicast service on a PUCCH.

Optionally, the number of semi-persistently scheduled transport blocks of the target multicast service is included in the bit number of the HARQ-ACK sub-codebook of the target multicast service;

> or
>
> the number of semi-persistently scheduled transport blocks of the target multicast service is included in the bit number of the HARQ-ACK sub-codebook of the unicast service.

Optionally, the processor is configured to read the computer program in the memory and perform the following operations:

> obtaining a sum of the DAI parameter of the last DCI in the DCIs of the unicast service and DAI parameters of the last DCIs corresponding to the N multicast services, subtracting the sum from the total number of DCIs received by the UE to obtain a total number of DCIs missed by the UE;
> performing a modulo operation on the total number of DCIs missed by the UE and a maximum count value of the counter DAI, thereby obtain an operation result, and multiplying the operation result with first multicast configuration information to obtain the total number of missed transport blocks corresponding to DCIs missed by the UE in unicast services and N multicast services.

Optionally, the processor is configured to read the computer program in the memory and perform the following operations:

> calculating the total number of missed transport blocks through the following formula:

$$n_{\text{HARQ-ACK,part1}} = \left( \left( \left( V_{\text{DAI},m_{\text{last(Unicast)}}}^{\text{DL}} + j(\text{unicast}) * T_D + \sum_{i=0}^{N-1} (V_{\text{DAI},m_{\text{last(i)}}}^{\text{DL}} + j(i) * T_D) \right) \right.\right.$$

$$\left.\left. - \sum_{c=0}^{N_{\text{cells}}^{\text{DL}}-1} U_{\text{DAI},c} \right) \mod(T_D) \right) N_{\text{TB,max}}^{\text{DL}}$$

where $n_{\text{HARQ-ACK,part1}}$ represents the total number of missed transport blocks; $V_{\text{DAI},m_{\text{last(unicast)}}}^{\text{DL}}$ represents the DAI parameter of the last DCI in DCIs of the unicast service; $V_{\text{DAI},m_{\text{last(i)}}}^{\text{DL}}$ represents the DAI parameter of the last DCI in the DCIs of the multicast service (i); j(unicast) represents the cycle number of DAIs for unicast services; j (i) represents the cycle number of DAIs for multicast services (i); $T_D$ represents the maximum count value of counter DAI; $U_{\text{DAI},c}$ represents the total number of DCIs of the unicast service and all multicast services, received by the UE; $N_{\text{TB,max}}^{\text{DL}}$ represents the first multicast configuration information; $N_{\text{cells}}^{\text{DL}}$ represents the number of cells in which the UE receives scheduling data.

Optionally, the processor is configured to read the computer program in the memory and perform the following operations:
determining the total number of reception transport blocks, according to the total number of transport blocks of the unicast service and N multicast services received by the UE, and the total number of semi-persistently scheduled transport blocks of the unicast service and the multicast service.

Optionally, the power control parameter of the PUCCH refers to a power control parameter that needs to feed back HARQ-ACK, and feedback of the HARQ-ACK is based on acknowledgment (ACK)/negative acknowledgment (NACK).

Optionally, the power control parameters of the PUCCH include:
relate DCI and transport blocks for feedback that convert NACK-only to ACK/NACK.

In the embodiment of the present disclosure, the UE determines the power control parameter of the PUCCH used to transmit the broadcast-multicast HARQ-ACK codebook according to the related parameters of the unicast and the related parameters of the multicast, so that the UE can perform better power control, thereby maximizing the power efficiency, which not only meets requirements of transmission power of PUCCH, but also saves power.

It is to be noted that, in FIG. 4, a bus architecture may include any number of interconnected bus and bridge. Specifically, various circuits of one or more processors, which are represented by the processor 410, and one or more memories, which are represented by the memory 420, are linked together. The bus architecture may link various other circuits, such as a peripheral device, voltage regulator and a power management circuit together. These features are well known in this field; therefore, this disclosure does not make further description on these features. The bus interface provides an interface. The transceiver 400 may be multiple elements, including a transmitter and a receiver and provide units, which communicate with other devices on the transmission medium. For different UEs, a user interface 430 may also be an interface capable of externally connecting required devices, and the connected devices include but are not limited to keypads, displays, speakers, microphones, joysticks, etc. The processor 410 is responsible for managing the bus architecture and the normal processing. The memory 420 may be used to store data used by the processor 410 for performing operations.

Optionally, the processor 410 may be a central processing unit (CPU), an application specific integrated circuit (ASIC), a field-programmable gate array (FPGA) or a complex programmable logic device (CPLD). The processor may also adopt multi-core architecture.

The processor is configured to execute any of the methods provided by the embodiments of the present application according to obtained executable instructions by calling the computer program stored in the memory. The processor and the memory can also be physically separated.

It is to be noted here that the above device provided by the embodiments of the present disclosure can implement all the method steps implemented by the above method embodiments, and can achieve the same technical effect. The parts and beneficial effects in this embodiment that are the same as those in the method embodiment will not be described in detail here.

In addition, one embodiment of the present disclosure further provides a processor-readable storage medium, which includes a computer program stored thereon. When the program is executed by a processor, the steps of the power control parameter determining method are implemented, with the same technical effect achieved, which will not be repeated here to avoid repetition. The readable storage medium may be any available medium or data storage device that can be accessed by a processor, including but not limited to magnetic storage (such as floppy disk, hard disk, magnetic tape, magneto-optical disk (MO)), optical storage (such as CD, DVD, BD, HVD), and semiconductor memory (such as ROM, EPROM, EEPROM, non-volatile memory (Nand flash), solid-state drive (SSD)).

Those skilled in the art should understand that the embodiments of the present application may be provided as methods, systems, or computer program products. Accordingly, in this application, an entirely hardware embodiment, an entirely software embodiment, or an embodiment combining software and hardware aspects may be adopted. Further, this application may adopt the form of a computer program product implemented on one or more computer available storage media (including but not limited to disk memory and optical memory) including computer available program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Obviously, those skilled in the art can make various changes and modifications to the present disclosure without departing from the spirit and scope of the present disclosure. Thus, if these modifications and variations of the present disclosure fall within the scope of the claims of the present disclosure and equivalent technologies thereof, the present disclosure also intends to include these modifications and variations.

It is to be noted that division of units in the embodiment of the present disclosure is only a logical function division; in actual implementation, all or part of the units may be integrated into one physical entity, or may also be physically separated. All of these units may be implemented in the form of using processing components to call software, or may be implemented by hardware, or some units are implemented in the form of using processing components to call software and some units are implemented by hardware. For example, the determination unit may be a separate processing element, or may be integrated into a chip of the above device; in addition, the determination unit may also be stored in the form of program codes in the memory of the above device, and is called by a certain processing element of the above device to execute the function of the above determination unit. The implementation of other units is similar. In addition, all or part of these units may be integrated together or implemented independently. The processing element described here may be an integrated circuit with signal processing capabilities. In the implementation process, each step of the above method or each of the above units may be completed by instructions of hardware integrated logic circuits or software in the processor element.

For example, each module, unit, sub-unit or sub-module may be one or more integrated circuits configured to implement the above method, such as one or more application specific integrated circuits (ASICs), or one or multiple digital signal processors (DSP), or one or more field programmable gate arrays (FPGA). For another example, when one of the above units is implemented in the form of using a processing element to call program codes, the processing element may be a general-purpose processor, such as a central processing unit (CPU) or other processors that can call the program codes. For another example, these units may be integrated together and implemented in the form of a system-on-a-chip (SOC).

The terms "first", "second" and the like in the description and claims of the present disclosure are used to distinguish similar objects and are not necessarily used to describe a specific order or sequence. It is to be understood that data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, for example, a process, method, system, product or device that includes a sequence of steps or units needs not be limited to those steps or units that are expressly listed, but may include steps or units that are not expressly listed or that are inherent to the process, method, product or device. In addition, "and/or" in the description and claims is used to indicate at least one of connected objects, for example, A and/or B and/or C, means that there are seven situations: there is A alone, there is B alone, there is C alone, there are both A and B, there are both B and C, there are both A and C, and there are A, B and C. Similarly, "at least one of A and B" in the specification and claims means that there is A alone, there is B alone, or there are both A and B.

**Claims**

1. A power control parameter determining method, comprising:

    obtaining, by a user equipment (UE), related parameters of unicast and related parameters of multicast; and
    determining, by the UE, the power control parameter of physical uplink control channel (PUCCH) according to the related parameters of the unicast and the related parameters of the multicast.

2. The method according to claim 1, wherein the related parameters of the multicast include at least one of the following:

    a downlink assignment index (DAI) parameter of a last downlink control information (DCI) in DCIs of the multicast;
    the number of DCIs of the multicast received by the UE;
    the number of transport blocks of the multicast received by the UE;
    the number of semi-persistently scheduled transport blocks of the multicast received by the UE.

3. The method according to claim 1, wherein the determining, by the UE, a power control parameter of physical uplink control channel (PUCCH) according to the related parameters of the unicast and the related parameters of the multicast, includes:

determining a first power control parameter of unicast service according to the related parameters of the unicast;
determining N second power control parameters of N multicast services, according to the related parameters of the multicast; wherein N is an integer greater than or equal to 1;
determining the power control parameter of the PUCCH according to the first power parameter and the N second power parameters.

4. The method according to claim 3, wherein the determining the power control parameter of the PUCCH according to the first power parameter and the N second power parameters, includes:

obtaining a sum of the first power control parameter and the N second power control parameters to obtain the power control parameter of the PUCCH, which is expressed with the following formula:

$$n_{\text{HARQ-ACK,TB}} = n_{\text{HARQ-ACK,TB(unicast)}} + \sum_{i=0}^{N-1} n_{\text{HARQ-ACK,TB(G-RNTI(i))}}$$

wherein $n_{\text{HARQ-ACK,TB}}$ represents the power control parameter of the PUCCH; $n_{\text{HARQ-ACK,TB(unicast)}}$ represents the first power parameter of the unicast service; $n_{\text{HARQ-ACK,TB(G-RNTI(i))}}$ represents a second power parameter of a multicast service (i); N represents the total number of multicast services.

5. The method according to claim 4, wherein the second power control parameter $n_{\text{HARQ-ACK,TB (G-RNTI(i))}}$ is equal to a bit number of HARQ-ACK sub-codebook of the multicast service (i) feed back by the UE corresponding to the multicast service (i) on a PUCCH.

6. The method according to claim 4, wherein the second power control parameter is calculated with the following formula:

$$n_{\text{HARQ-ACK,TB (G-RNTI(i))}}$$

$$= \left( \left( \left( V_{\text{DAI,m}_{\text{last(i)}}}^{\text{DL}} - \sum_{c=0}^{N_{\text{cells}}^{\text{DL}}-1} U_{\text{DAI,c(i)}} \right) \mod(T_D) \right) N_{\text{TB,max}}^{\text{DL}} \right.$$

$$\left. + \sum_{c=0}^{N_{\text{cells}}^{\text{DL}}-1} \left( \sum_{m=0}^{M-1} N_{\text{m,c(i)}}^{\text{received}} + N_{\text{SPS,c(i)}} \right) \right)$$

wherein $n_{\text{HARQ-ACK,TB (G-RNTI(i))}}$ represents the second power control parameter of the multicast service (i); $V_{\text{DAI,m}_{\text{last(i)}}}^{\text{DL}}$ represents a DAI parameter of a last DCI of the multicast service (i); $U_{\text{DAI,c(i)}}$ represents the number of DCIs of the multicast service (i) received by the UE; $N_{\text{cells}}^{\text{DL}}$ represents the number of cells in which the UE receives scheduling data; $T_D$ represents a maximum count value of a counter DAI; $N_{\text{TB,max}}^{\text{DL}}$ represents first multicast configuration information; $N_{\text{m,c(i)}}^{\text{received}}$ represents the number of transport blocks of the multicast service (i) received by the UE; $N_{\text{SPS,c(i)}}$ represents the number of semi-persistently scheduled transport blocks of the multicast service (i); M represents the number of the physical downlink control channel (PDCCH) detection opportunities.

7. The method according to claim 6, wherein a value of $N_{\text{TB,max}}^{\text{DL}}$ is configured or defaults to 1.

8. The method according to claim 3, wherein the determining N second power control parameters of N multicast services, according to the related parameters of the multicast, includes:

respectively determining the number of missed transport blocks corresponding to DCIs missed by the UE in each multicast service according to the related parameters of the multicast;
respectively determining the number of reception transport blocks corresponding to DCIs received by the UE in each multicast service according to the related parameters of the multicast;
determining the N second power control parameters of the N multicast services according to the number of missed transport blocks and the number of reception transport blocks.

9. The method according to claim 8, wherein the respectively determining the number of reception transport blocks corresponding to DCIs received by the UE in each multicast service according to the related parameters of the multicast, includes:

obtaining a sum of the number of transport blocks of a target multicast service received by the UE and the number of semi-persistently scheduled transport blocks of the target multicast service, thereby determining the number of reception transport blocks corresponding to DCIs received by the UE in the target multicast service;
wherein the target multicast service is any one of the N multicast services.

10. The method according to claim 1, wherein the determining, by the UE, a power control parameter of physical uplink control channel (PUCCH) according to the related parameters of the unicast and the related parameters of the multicast, includes:

determining a total number of missed transport blocks corresponding to DCIs missed by the UE in the unicast service and N multicast services according to the related parameters of the unicast and the related parameters of the multicast, wherein N is an integer greater than or equal to 1;
determining a total number of reception transport blocks corresponding to DCIs received by the UE in the unicast service and the multicast service according to the related parameters of the unicast and the related parameters of the multicast;
determining the power control parameters of the PUCCH according to the total number of missed transport blocks and the total number of reception transport blocks.

11. The method according to claim 10, wherein the determining a total number of missed transport blocks corresponding to DCIs missed by the UE in the unicast service and N multicast services according to the related parameters of the unicast and the related parameters of the multicast, includes:

determining the number of missed transport blocks of the unicast corresponding to DCIs missed by the UE in the unicast service according to the related parameters of the unicast;
respectively determining the number of missed transport blocks corresponding to DCIs missed by the UE in each multicast service according to the related parameters of the multicast;
determining the total number of missed transport blocks according to the number of missed transport blocks of the unicast and the number of missed transport blocks corresponding to each multicast service.

12. The method according to claim 8 or 11, wherein the respectively determining the number of missed transport blocks corresponding to DCIs missed by the UE in each multicast service according to the related parameters of the multicast, includes:

subtracting a DAI parameter of a last DCI corresponding to a target multicast service from the number of DCIs of the target multicast service received by the UE, thereby obtaining the number of DCIs missed by the UE in the target multicast service;
performing a modulo operation on the number of DCIs missed by the UE and a maximum count value of a counter DAI, thereby obtain an operation result, and multiplying the operation result with first multicast configuration information to obtain the number of missed transport blocks corresponding to DCIs missed by the UE in the target multicast service;
wherein the target multicast service is any one of the N multicast services.

13. The method according to claim 8 or 11, wherein the respectively determining the number of missed transport blocks corresponding to DCIs missed by the UE in each multicast service according to the related parameters of the multicast, includes:

> obtaining a product of a cycle number of DAI of a target multicast service and a maximum count value of a counter DAI;
>
> obtaining a sum of the product and a DAI parameter of a last DCI received by the UE corresponding to the target multicast service, and subtracting the sum from the number of DCIs of the target multicast service received by the UE, thereby obtaining a first operation result;
>
> multiplying the first operation result with the first multicast configuration information, thereby obtaining the number of missed transport blocks corresponding to DCIs missed by the UE in the target multicast service;
>
> wherein the target multicast service is any one of the N multicast services.

14. The method according to claim 11, wherein the determining the total number of missed transport blocks according to the number of missed transport blocks of the unicast and the number of missed transport blocks corresponding to each multicast service, includes:

    obtaining a sum of the number of missed transport blocks of the unicast and the number of missed transport blocks of N multicast services to obtain the total number of missed transport blocks.

15. The method according to claim 10, wherein the determining a total number of missed transport blocks corresponding to DCIs missed by the UE in the unicast service and N multicast services according to the related parameters of the unicast and the related parameters of the multicast, includes:

    > determining the number of missed transport blocks of the unicast corresponding to DCIs missed by the UE in the unicast service according to the related parameters of the unicast;
    >
    > determining the number of missed transport blocks of the multicast corresponding to DCIs missed by the UE in the N multicast services according to the related parameters of the multicast; wherein the number of the missed transport blocks of the multicast is a total number of transport blocks missed by the UE in the N multicast services;
    >
    > determining the total number of missed transport blocks according to the number of missed transport blocks of the unicast and the number of missed transport blocks of the multicast.

16. The method according to claim 15, wherein the determining the number of missed transport blocks of the multicast corresponding to DCIs missed by the UE in the N multicast services according to the related parameters of the multicast, includes:

    > subtracting a sum of DAI parameters of last DCIs corresponding to the N multicast services from a sum of numbers of DCIs of the N multicast services received by the UE, thereby obtaining a total number of DCIs missed by the UE;
    >
    > performing a modulo operation on the total number of DCIs missed by the UE and a maximum count value of a counter DAI, thereby obtain an operation result, and multiplying the operation result with first multicast configuration information to obtain the number of missed multicast transport blocks corresponding to DCIs missed by the UE in the N multicast services.

17. The method according to claim 15, wherein the determining the number of missed transport blocks of the multicast corresponding to DCIs missed by the UE in the N multicast services according to the related parameters of the multicast, includes:

    > obtaining a product of a cycle number of DAI of a target multicast service and a maximum count value of a counter DAI;
    >
    > obtaining a sum of the product and the number of DCIs of the target multicast service received by the UE, thereby obtaining a second operation result;
    >
    > obtaining a sum of second operation results corresponding to the N multicast services, and subtracting the sum of the second operation results from the sum of the DCIs of the N multicast services received by the UE to obtain a third operation result;
    >
    > multiplying the third operation result with the first multicast configuration information, thereby obtaining the number of missed transport blocks corresponding to DCIs missed by the UE in the N multicast service.

18. The method according to claim 15, wherein the determining the total number of missed transport blocks according to the number of missed transport blocks of the unicast and the number of missed transport blocks of the multicast, includes:
obtaining a sum of the number of missed transport blocks of the unicast and the number of missed transport blocks of the multicast to obtain the total number of missed transport blocks.

19. The method according to claim 3, or 12 or 16, wherein in case that the first multicast configuration information is 1, the power control parameter of the target multicast service is: a bit number of HARQ-ACK sub-codebook of a target multicast service fed back by the UE corresponding to the target multicast service on a PUCCH.

20. The method according to claim 19, wherein the number of semi-persistently scheduled transport blocks of the target multicast service is included in the bit number of the HARQ-ACK sub-codebook of the target multicast service; or
the number of semi-persistently scheduled transport blocks of the target multicast service is included in a bit number of a HARQ-ACK sub-codebook of the unicast service.

21. The method according to claim 10, wherein the determining a total number of missed transport blocks corresponding to DCIs missed by the UE in the unicast service and N multicast services according to the related parameters of the unicast and the related parameters of the multicast, includes:

obtaining a sum of a DAI parameter of a last DCI in DCIs of the unicast service and DAI parameters of last DCIs corresponding to the N multicast services, subtracting the sum from a total number of DCIs received by the UE to obtain a total number of DCIs missed by the UE;
performing a modulo operation on the total number of DCIs missed by the UE and a maximum count value of a counter DAI, thereby obtain an operation result, and multiplying the operation result with first multicast configuration information to obtain the total number of missed transport blocks corresponding to DCIs missed by the UE in the unicast services and the N multicast services.

22. The method according to claim 10, wherein the determining a total number of missed transport blocks corresponding to DCIs missed by the UE in the unicast service and N multicast services according to the related parameters of the unicast and the related parameters of the multicast, includes:

calculating the total number of missed transport blocks through the following formula:

$$n_{\text{HARQ-ACK,part1}} = \left( \left( V_{\text{DAI},m_{\text{last(Unicast)}}}^{\text{DL}} + j(\text{unicast}) * T_D + \sum_{i=0}^{N-1} (V_{\text{DAI},m_{\text{last(i)}}}^{\text{DL}} + j(i) * T_D) \right. \right.$$

$$\left. \left. - \sum_{c=0}^{N_{\text{cells}}^{\text{DL}}-1} U_{\text{DAI},c} \right) \text{mod}(T_D) \right) N_{\text{TB,max}}^{\text{DL}}$$

wherein $n_{\text{HARQ-ACK,part1}}$ represents the total number of missed transport blocks; $V_{\text{DAI},m_{\text{last(unicast)}}}^{\text{DL}}$ represents a DAI parameter of a last DCI in DCIs of the unicast service; $V_{\text{DAI},m_{\text{last(i)}}}^{\text{DL}}$ represents a DAI parameter of a last DCI in the DCIs of a multicast service (i); j(unicast) represents a cycle number of DAIs for unicast services; j (i) represents a cycle number of DAIs for multicast services (i); $T_D$ represents a maximum count value of counter DAI; $U_{\text{DAI},c}$ represents a total number of DCIs of the unicast service and all multicast services, received by the UE; $N_{\text{TB,max}}^{\text{DL}}$ represents the first multicast configuration information; $N_{\text{cells}}^{\text{DL}}$ represents the number of cells in which the UE receives scheduling data.

23. The method according to claim 10, wherein the determining a total number of reception transport blocks corresponding to DCIs received by the UE in the unicast service and the multicast service according to the related parameters of the unicast and the related parameters of the multicast, includes:
determining the total number of reception transport blocks, according to a total number of transport blocks of the unicast service and N multicast services received by the UE, and a total number of semi-persistently scheduled transport blocks of the unicast service and the multicast service.

24. The method according to claim 1, wherein the power control parameter of the PUCCH refers to a power control parameter that needs to feed back HARQ-ACK, and feedback of the HARQ-ACK is based on acknowledgment (ACK)/negative acknowledgment (NACK).

25. The method according to claim 24, wherein the power control parameters of the PUCCH include:
related DCI and transport blocks for feedback that convert NACK-only to ACK/NACK.

26. A power control parameter determining device, comprising: a memory, a transceiver, and a processor;
wherein the memory is used to store a computer program; the transceiver is used to transmit and receive data under control of the processor; the processor is used to read the computer program in the memory and perform the following operations:

obtaining related parameters of unicast and related parameters of multicast; and
determining the power control parameter of physical uplink control channel (PUCCH) according to the related parameters of the unicast and the related parameters of the multicast.

27. The device according to claim 26, wherein the related parameters of the multicast include at least one of the following:

a downlink assignment index (DAI) parameter of a last downlink control information (DCI) in DCIs of the multicast;
the number of DCIs of the multicast received by the UE;
the number of transport blocks of the multicast received by the UE;
the number of semi-persistently scheduled transport blocks of the multicast received by the UE.

28. The device according to claim 26, wherein the processor is used to read the computer program in the memory and perform the following operations:

determining a first power control parameter of a unicast service according to the related parameters of the unicast;
determining a second power control parameter of N multicast services, according to the related parameters of the multicast; wherein N is an integer greater than or equal to 1;
determining the power control parameter of the PUCCH according to the first power parameter and the second power parameter.

29. The device according to claim 28, wherein the processor is used to read the computer program in the memory and perform the following operations:

obtaining a sum of the first power control parameter and the N second power control parameters to obtain the power control parameter of the PUCCH, which is expressed with the following formula:

$$n_{\text{HARQ-ACK,TB}} = n_{\text{HARQ-ACK,TB(unicast)}} + \sum_{i=0}^{N-1} n_{\text{HARQ-ACK,TB(G-RNTI(i))}}$$

wherein $n_{\text{HARQ-ACK,TB}}$ represents the power control parameter of the PUCCH; $n_{\text{HARQ-ACK,TB(unicast)}}$ represents the first power parameter of the unicast service; $n_{\text{HARQ-ACK,TB(G-RNTi(i))}}$ represents a second power parameter of a multicast service (i); N represents the total number of multicast services.

30. The device according to claim 29, wherein the second power control parameter $n_{\text{HARQ-ACK,TB (G-RNTI(i))}}$ is equal to a bit number of HARQ-ACK sub-codebook of the multicast service (i) fed back by the UE corresponding to the multicast service (i) on a PUCCH.

31. The device according to claim 29, wherein the second power control parameter is calculated with the following

formula:

$$n_{\text{HARQ-ACK,TB (G-RNTI(i))}}$$

$$= \left( \left( \left( V^{\text{DL}}_{\text{DAI},m_{\text{last(i)}}} - \sum_{c=0}^{N^{\text{DL}}_{\text{cells}}-1} U_{\text{DAI},c(i)} \right) \text{mod}(T_{\text{D}}) \right) N^{\text{DL}}_{\text{TB,max}} \right.$$

$$\left. + \sum_{c=0}^{N^{\text{DL}}_{\text{cells}}-1} \left( \sum_{m=0}^{M-1} N^{\text{received}}_{m,c(i)} + N_{\text{SPS},c(i)} \right) \right)$$

wherein $n_{\text{HARQ-ACK,TB (G-RNTI(i))}}$ represents the second power control parameter of the multicast service (i); $V^{\text{DL}}_{\text{DAI},m_{\text{last(i)}}}$ represents a DAI parameter of a last DCI of the multicast service (i); $U_{\text{DAI},c(i)}$ represents the number of DCIs of the multicast service (i) received by the UE; $N^{\text{DL}}_{\text{cells}}$ represents the number of cells in which the UE receives scheduling data; $T_{\text{D}}$ represents a maximum count value of a counter DAI; $N^{\text{DL}}_{\text{TB,max}}$ represents first multicast configuration information; $N^{\text{received}}_{m,c(i)}$ represents the number of transport blocks of the multicast service (i) received by the UE; $N_{\text{SPS},c(i)}$ represents the number of semi-persistently scheduled transport blocks of the multicast service (i); M represents the number of the physical downlink control channel (PDCCH) detection opportunities.

32. The device according to claim 31, wherein a value of $N^{\text{DL}}_{\text{TB,max}}$ is configured or defaults to 1.

33. The device according to claim 28, wherein the processor is used to read the computer program in the memory and perform the following operations:

respectively determining the number of missed transport blocks corresponding to DCIs missed by the UE in each multicast service according to the related parameters of the multicast; respectively determining the number of reception transport blocks corresponding to DCIs received by the UE in each multicast service according to the related parameters of the multicast; determining the second power control parameter of the N multicast services according to the number of missed transport blocks and the number of reception transport blocks.

34. The device according to claim 33, wherein the processor is used to read the computer program in the memory and perform the following operations:

obtaining a sum of the number of transport blocks of a target multicast service received by the UE and the number of semi-persistently scheduled transport blocks of the target multicast service, thereby determining the number of reception transport blocks corresponding to DCIs received by the UE in the target multicast service; wherein the target multicast service is any one of the N multicast services.

35. The device according to claim 26, wherein the processor is used to read the computer program in the memory and perform the following operations:

determining a total number of missed transport blocks corresponding to DCIs missed by the UE in the unicast service and N multicast services according to the related parameters of the unicast and the related parameters of the multicast, wherein N is an integer greater than or equal to 1; determining a total number of reception transport blocks corresponding to DCIs received by the UE in the unicast service and the multicast service according to the related parameters of the unicast and the related parameters of the multicast;
determining the power control parameters of the PUCCH according to the total number of missed transport blocks and the total number of reception transport blocks.

36. The device according to claim 26, wherein the processor is used to read the computer program in the memory and perform the following operations:

determining the number of missed transport blocks of the unicast corresponding to DCIs missed by the UE in the unicast service according to the related parameters of the unicast;
respectively determining the number of missed transport blocks corresponding to DCIs missed by the UE in each multicast service according to the related parameters of the multicast;
determining the total number of missed transport blocks according to the number of missed transport blocks of the unicast and the number of missed transport blocks corresponding to each multicast service.

37. The device according to claim 33 or 36, wherein the processor is used to read the computer program in the memory and perform the following operations:

subtracting a DAI parameter of a last DCI corresponding to a target multicast service from the number of DCIs of the target multicast service received by the UE, thereby obtaining the number of DCIs missed by the UE in the target multicast service;
performing a modulo operation on the number of DCIs missed by the UE and a maximum count value of a counter DAI, thereby obtain an operation result, and multiplying the operation result with first multicast configuration information to obtain the number of missed transport blocks corresponding to DCIs missed by the UE in the target multicast service;
wherein the target multicast service is any one of the N multicast services.

38. The device according to claim 33 or 36, wherein the processor is used to read the computer program in the memory and perform the following operations:

obtaining a product of a cycle number of DAI of a target multicast service and a maximum count value of a counter DAI;
obtaining a sum of the product and a DAI parameter of a last DCI received by the UE corresponding to the target multicast service, and subtracting the sum from the number of DCIs of the target multicast service received by the UE, thereby obtaining a first operation result;
multiplying the first operation result with the first multicast configuration information, thereby obtaining the number of missed transport blocks corresponding to DCIs missed by the UE in the target multicast service;
wherein the target multicast service is any one of the N multicast services.

39. The device according to claim 36, wherein the processor is used to read the computer program in the memory and perform the following operations:
obtaining a sum of the number of missed transport blocks of the unicast and the number of missed transport blocks of N multicast services to obtain the total number of missed transport blocks.

40. The device according to claim 35, wherein the processor is used to read the computer program in the memory and perform the following operations:

determining the number of missed transport blocks of the unicast corresponding to DCIs missed by the UE in the unicast service according to the related parameters of the unicast;
determining the number of missed transport blocks of the multicast corresponding to DCIs missed by the UE in the N multicast services according to the related parameters of the multicast; wherein the number of the missed transport blocks of the multicast is a total number of transport blocks missed by the UE in the N multicast services;
determining the total number of missed transport blocks according to the number of missed transport blocks of the unicast and the number of missed transport blocks of the multicast.

41. The device according to claim 40, wherein the processor is used to read the computer program in the memory and perform the following operations:

subtracting a sum of DAI parameters of last DCIs corresponding to the N multicast services from a sum of numbers of DCIs of the N multicast services received by the UE, thereby obtaining a total number of DCIs missed by the UE;

performing a modulo operation on the total number of DCIs missed by the UE and a maximum count value of a counter DAI, thereby obtain an operation result, and multiplying the operation result with first multicast configuration information to obtain the number of missed multicast transport blocks corresponding to DCIs missed by the UE in the N multicast services.

42. The device according to claim 40, wherein the processor is used to read the computer program in the memory and perform the following operations:

obtaining a product of a cycle number of DAI of a target multicast service and a maximum count value of a counter DAI;

obtaining a sum of the product and the number of DCIs of the target multicast service received by the UE, thereby obtaining a second operation result;

obtaining a sum of second operation results corresponding to the N multicast services, and subtracting the sum of the second operation results from the sum of the DCIs of the N multicast services received by the UE to obtain a third operation result;

multiplying the third operation result with the first multicast configuration information, thereby obtaining the number of missed transport blocks corresponding to DCIs missed by the UE in the N multicast service.

43. The device according to claim 40, wherein the processor is used to read the computer program in the memory and perform the following operations:
obtaining a sum of the number of missed transport blocks of the unicast and the number of missed transport blocks of the multicast to obtain the total number of missed transport blocks.

44. The device according to claim 28, or 37 or 41, wherein in case that the first multicast configuration information is 1, the power control parameter of the target multicast service is: a bit number of HARQ-ACK sub-codebook of a target multicast service fed back by the UE corresponding to the target multicast service on a PUCCH.

45. The device according to claim 44, wherein the number of semi-persistently scheduled transport blocks of the target multicast service is included in the bit number of the HARQ-ACK sub-codebook of the target multicast service; or the number of semi-persistently scheduled transport blocks of the target multicast service is included in a bit number of a HARQ-ACK sub-codebook of the unicast service.

46. The device according to claim 35, wherein the processor is used to read the computer program in the memory and perform the following operations:

obtaining a sum of a DAI parameter of a last DCI in DCIs of the unicast service and DAI parameters of last DCIs corresponding to the N multicast services, subtracting the sum from a total number of DCIs received by the UE to obtain a total number of DCIs missed by the UE;

performing a modulo operation on the total number of DCIs missed by the UE and a maximum count value of a counter DAI, thereby obtain an operation result, and multiplying the operation result with first multicast configuration information to obtain the total number of missed transport blocks corresponding to DCIs missed by the UE in the unicast services and the N multicast services.

47. The device according to claim 35, wherein the processor is used to read the computer program in the memory and perform the following operations:

calculating the total number of missed transport blocks through the following formula:

$$n_{HARQ\text{-}ACK,part1} = \left(\left(\left(V^{DL}_{DAI,m_{last(Unicast)}} + j(unicast) * T_D + \sum_{i=0}^{N-1}(V^{DL}_{DAI,m_{last(i)}} + j(i) * T_D) - \sum_{c=0}^{N^{DL}_{cells}-1} U_{DAI,c}\right) mod(T_D)\right) N^{DL}_{TB,max}\right)$$

wherein $n_{HARQ\text{-}ACK,part1}$ represents the total number of missed transport blocks; $V^{DL}_{DAI,m_{last(unicast)}}$ represents a DAI parameter of a last DCI in DCIs of the unicast service; $V^{DL}_{DAI,m_{last(i)}}$ represents a DAI parameter of a last DCI in the DCIs of a multicast service (i); j(unicast) represents a cycle number of DAIs for unicast services; j (i) represents a cycle number of DAIs for multicast services (i); $T_D$ represents a maximum count value of counter DAI; $U_{DAI,c}$ represents a total number of DCIs of the unicast service and all multicast services, received by the UE; $N^{DL}_{TB,max}$ represents the first multicast configuration information; $N^{DL}_{cells}$ represents the number of cells in which the UE receives scheduling data.

48. The device according to claim 35, wherein the processor is used to read the computer program in the memory and perform the following operations:
   determining the total number of reception transport blocks, according to a total number of transport blocks of the unicast service and N multicast services received by the UE, and a total number of semi-persistently scheduled transport blocks of the unicast service and the multicast service.

49. The device according to claim 26, wherein the power control parameter of the PUCCH refers to a power control parameter that needs to feed back HARQ-ACK, and feedback of the HARQ-ACK is based on acknowledgment (ACK)/negative acknowledgment (NACK).

50. The device according to claim 49, wherein the power control parameters of the PUCCH include:
   related DCI and transport blocks for feedback that convert NACK-only to ACK/NACK.

51. A power control parameter determining device, comprising:

   an obtaining unit configured to obtain related parameters of unicast and related parameters of multicast; and
   a determining unit configured to determine a power control parameter of physical uplink control channel (PUCCH) according to the related parameters of the unicast and the related parameters of the multicast.

52. The device according to claim 51, wherein the related parameters of the multicast include at least one of the following:

   a downlink assignment index (DAI) parameter of a last downlink control information (DCI) in DCIs of the multicast;
   the number of DCIs of the multicast received by the UE;
   the number of transport blocks of the multicast received by the UE;
   the number of semi-persistently scheduled transport blocks of the multicast received by the UE.

53. The device according to claim 51, wherein the determining unit includes:

   a first determining subunit configured to determine a first power control parameter of a unicast service according to the related parameters of the unicast;
   a second determining subunit configured to determine a second power control parameter of N multicast services, according to the related parameters of the multicast; wherein N is an integer greater than or equal to 1;
   a third determining subunit configured to determine the power control parameter of the PUCCH according to the first power parameter and the second power parameter.

**54.** The device according to claim 53, wherein the third determining subunit is further configured to:

obtain a sum of the first power control parameter and the N second power control parameters to obtain the power control parameter of the PUCCH, which is expressed with the following formula:

$$n_{\text{HARQ-ACK,TB}} = n_{\text{HARQ-ACK,TB(unicast)}} + \sum_{i=0}^{N-1} n_{\text{HARQ-ACK,TB(G-RNTI(i))}}$$

wherein $n_{\text{HARQ-ACK,TB}}$ represents the power control parameter of the PUCCH; $n_{\text{HARQ-ACK,TB(unicast)}}$ represents the first power parameter of the unicast service; $n_{\text{HARQ-ACK,TB(G-RNTi(i))}}$ represents a second power parameter of a multicast service (i); N represents the total number of multicast services.

**55.** The device according to claim 54, wherein the second power control parameter $n_{\text{HARQ-ACK,TB (G-RNTI(i))}}$ is equal to a bit number of HARQ-ACK sub-codebook of the multicast service (i) fed back by the UE corresponding to the multicast service (i) on a PUCCH.

**56.** The device according to claim 54, wherein the second power control parameter is calculated with the following formula:

$$n_{\text{HARQ-ACK,TB (G-RNTI(i))}}$$

$$= \left( \left( V_{\text{DAI},m_{\text{last(i)}}}^{\text{DL}} - \sum_{c=0}^{N_{\text{cells}}^{\text{DL}}-1} U_{\text{DAI,c(i)}} \right) \text{mod}(T_{\text{D}}) \right) N_{\text{TB,max}}^{\text{DL}}$$

$$+ \sum_{c=0}^{N_{\text{cells}}^{\text{DL}}-1} \left( \sum_{m=0}^{M-1} N_{m,c(i)}^{\text{received}} + N_{\text{SPS,c(i)}} \right)$$

wherein $n_{\text{HARQ-ACK,TB (G-RNTI(i))}}$ represents the second power control parameter of the multicast service (i); $V_{\text{DAI},m_{\text{last(i)}}}^{\text{DL}}$ represents a DAI parameter of a last DCI of the multicast service (i); $U_{\text{DAI,c(i)}}$ represents the number of DCIs of the multicast service (i) received by the UE; $N_{\text{cells}}^{\text{DL}}$ represents the number of cells in which the UE receives scheduling data; $T_{\text{D}}$ represents a maximum count value of a counter DAI; $N_{\text{TB,max}}^{\text{DL}}$ represents first multicast configuration information; $N_{m,c(i)}^{\text{received}}$ represents the number of transport blocks of the multicast service (i) received by the UE; $N_{\text{SPS,c(i)}}$ represents the number of semi-persistently scheduled transport blocks of the multicast service (i); M represents the number of the physical downlink control channel (PDCCH) detection opportunities.

**57.** The device according to claim 56, wherein a value of $N_{\text{TB,max}}^{\text{DL}}$ is configured or defaults to 1.

**58.** The device according to claim 53, wherein the second determining subunit is further configured to:

respectively determining the number of missed transport blocks corresponding to DCIs missed by the UE in each multicast service according to the related parameters of the multicast;
respectively determining the number of reception transport blocks corresponding to DCIs received by the UE in each multicast service according to the related parameters of the multicast;
determining the second power control parameter of the N multicast services according to the number of missed transport blocks and the number of reception transport blocks.

59. The device according to claim 58, wherein when respectively determining the number of reception transport blocks corresponding to DCI received by the UE in each multicast service according to the related parameters of the multicast, the second determining subunit is further configured to:

obtain a sum of the number of transport blocks of a target multicast service received by the UE and the number of semi-persistently scheduled transport blocks of the target multicast service, thereby determining the number of reception transport blocks corresponding to DCIs received by the UE in the target multicast service;
wherein the target multicast service is any one of the N multicast services.

60. The device according to claim 51, wherein the determining unit includes:

a fourth determining subunit configured to determine a total number of missed transport blocks corresponding to DCIs missed by the UE in the unicast service and N multicast services according to the related parameters of the unicast and the related parameters of the multicast, wherein N is an integer greater than or equal to 1;
a fifth determining subunit configured to determine a total number of reception transport blocks corresponding to DCIs received by the UE in the unicast service and the multicast service according to the related parameters of the unicast and the related parameters of the multicast;
a sixth determining subunit configured to determine the power control parameters of the PUCCH according to the total number of missed transport blocks and the total number of reception transport blocks.

61. The device according to claim 60, wherein the fourth determining subunit is specifically configured to:

determine the number of missed transport blocks of the unicast corresponding to DCIs missed by the UE in the unicast service according to the related parameters of the unicast;
respectively determine the number of missed transport blocks corresponding to DCIs missed by the UE in each multicast service according to the related parameters of the multicast;
determine the total number of missed transport blocks according to the number of missed transport blocks of the unicast and the number of missed transport blocks corresponding to each multicast service.

62. The device according to claim 58 or 61, wherein when respectively determining the number of missed transport blocks corresponding to DCIs missed by the UE in each multicast service according to the related parameters of the multicast, the fourth determining subunit is specifically configured to:

subtracting a DAI parameter of a last DCI corresponding to a target multicast service from the number of DCIs of the target multicast service received by the UE, thereby obtaining the number of DCIs missed by the UE in the target multicast service;
performing a modulo operation on the number of DCIs missed by the UE and a maximum count value of a counter DAI, thereby obtain an operation result, and multiplying the operation result with first multicast configuration information to obtain the number of missed transport blocks corresponding to DCIs missed by the UE in the target multicast service;
wherein the target multicast service is any one of the N multicast services.

63. The device according to claim 58 or 61, wherein when respectively determining the number of missed transport blocks corresponding to DCIs missed by the UE in each multicast service according to the related parameters of the multicast, the fourth determining subunit is specifically configured to:

obtain a product of a cycle number of DAI of a target multicast service and a maximum count value of a counter DAI;
obtain a sum of the product and a DAI parameter of a last DCI received by the UE corresponding to the target multicast service, and subtract the sum from the number of DCIs of the target multicast service received by the UE, thereby obtaining a first operation result;
multiply the first operation result with the first multicast configuration information, thereby obtaining the number of missed transport blocks corresponding to DCIs missed by the UE in the target multicast service;
wherein the target multicast service is any one of the N multicast services.

**64.** The device according to claim 61, wherein when determining the total number of missed transport blocks according to the number of missed transport blocks of the unicast and the number of missed transport blocks corresponding to each multicast service, the fourth determining subunit is specifically configured to:
obtain a sum of the number of missed transport blocks of the unicast and the number of missed transport blocks of N multicast services to obtain the total number of missed transport blocks.

**65.** The device according to claim 60, wherein the fourth determining subunit is specifically configured to:

determine the number of missed transport blocks of the unicast corresponding to DCIs missed by the UE in the unicast service according to the related parameters of the unicast;
determine the number of missed transport blocks of the multicast corresponding to DCIs missed by the UE in the N multicast services according to the related parameters of the multicast; wherein the number of the missed transport blocks of the multicast is a total number of transport blocks missed by the UE in the N multicast services;
determine the total number of missed transport blocks according to the number of missed transport blocks of the unicast and the number of missed transport blocks of the multicast.

**66.** The device according to claim 65, wherein when determining the number of missed transport blocks of the multicast corresponding to DCIs missed by the UE in N multicast services according to the related parameters of multicast, the fourth determining subunit is specifically configured to:

subtract a sum of DAI parameters of last DCIs corresponding to the N multicast services from a sum of numbers of DCIs of the N multicast services received by the UE, thereby obtaining a total number of DCIs missed by the UE;
perform a modulo operation on the total number of DCIs missed by the UE and a maximum count value of a counter DAI, thereby obtain an operation result, and multiply the operation result with first multicast configuration information to obtain the number of missed multicast transport blocks corresponding to DCIs missed by the UE in the N multicast services.

**67.** The device according to claim 65, wherein when determining the number of missed transport blocks of the multicast corresponding to DCIs missed by the UE in the N multicast services according to multicast related parameters of multicast, the fourth determining subunit is specifically configured to:

obtain a product of a cycle number of DAI of a target multicast service and a maximum count value of a counter DAI;
obtain a sum of the product and the number of DCIs of the target multicast service received by the UE, thereby obtaining a second operation result;
obtain a sum of second operation results corresponding to the N multicast services, and subtract the sum of the second operation results from the sum of the DCIs of the N multicast services received by the UE to obtain a third operation result;
multiply the third operation result with the first multicast configuration information, thereby obtaining the number of missed transport blocks corresponding to DCIs missed by the UE in the N multicast service.

**68.** The device according to claim 65, wherein when determining the total number of missed transport blocks according to the number of missed transport blocks of unicast and the number of missed transport blocks of multicast, the fourth determining subunit is specifically configured to:
obtain a sum of the number of missed transport blocks of the unicast and the number of missed transport blocks of the multicast to obtain the total number of missed transport blocks.

**69.** The device according to claim 53, or 62 or 66, wherein in case that the first multicast configuration information is 1, the power control parameter of the target multicast service is: a bit number of HARQ-ACK sub-codebook of a target multicast service fed back by the UE corresponding to the target multicast service on a PUCCH.

**70.** The device according to claim 69, wherein the number of semi-persistently scheduled transport blocks of the target multicast service is included in the bit number of the HARQ-ACK sub-codebook of the target multicast service; or
the number of semi-persistently scheduled transport blocks of the target multicast service is included in a bit number of a HARQ-ACK sub-codebook of the unicast service.

**71.** The device according to claim 60, wherein the fourth determining subunit is specifically configured to:

obtain a sum of a DAI parameter of a last DCI in DCIs of the unicast service and DAI parameters of last DCIs corresponding to the N multicast services, subtract the sum from a total number of DCIs received by the UE to obtain a total number of DCIs missed by the UE;

perform a modulo operation on the total number of DCIs missed by the UE and a maximum count value of a counter DAI, thereby obtain an operation result, and multiply the operation result with first multicast configuration information to obtain the total number of missed transport blocks corresponding to DCIs missed by the UE in the unicast services and the N multicast services.

**72.** The device according to claim 60, wherein the fourth determining subunit is specifically configured to:

calculate the total number of missed transport blocks through the following formula:

$$n_{\text{HARQ-ACK,part1}} = \left(\left(\left(V^{DL}_{DAI,m_{last(Unicast)}} + j(\text{unicast}) * T_D + \sum_{i=0}^{N-1}(V^{DL}_{DAI,m_{last(i)}} + j(i) * T_D)\right.\right.\right.$$

$$\left.\left.\left. - \sum_{c=0}^{N^{DL}_{cells}-1} U_{DAI,c}\right) \mod(T_D)\right) N^{DL}_{TB,max}\right)$$

wherein $n_{\text{HARQ-ACK,part1}}$ represents the total number of missed transport blocks; $V^{DL}_{DAI,m_{last(unicast)}}$ represents a DAI parameter of a last DCI in DCIs of the unicast service; $V^{DL}_{DAI,m_{last(i)}}$ represents a DAI parameter of a last DCI in the DCIs of a multicast service (i); j(unicast) represents a cycle number of DAIs for unicast services; j (i) represents a cycle number of DAIs for multicast services (i); $T_D$ represents a maximum count value of counter DAI; $U_{DAI,c}$ represents a total number of DCIs of the unicast service and all multicast services, received by the UE; $N^{DL}_{TB,max}$ represents the first multicast configuration information; $N^{DL}_{cells}$ represents the number of cells in which the UE receives scheduling data.

**73.** The device according to claim 60, wherein the fifth determining subunit is specifically configured to:
determine the total number of reception transport blocks, according to a total number of transport blocks of the unicast service and N multicast services received by the UE, and a total number of semi-persistently scheduled transport blocks of the unicast service and the multicast service.

**74.** The device according to claim 51, wherein the power control parameter of the PUCCH refers to a power control parameter that needs to feed back HARQ-ACK, and feedback of the HARQ-ACK is based on acknowledgment (ACK)/negative acknowledgment (NACK).

**75.** The device according to claim 74, wherein the power control parameters of the PUCCH include: related DCI and transport blocks for feedback that convert NACK-only to ACK/NACK.

**76.** A processor-readable storage medium, comprising a computer program stored thereon; wherein the computer program, when executed by a processor, causes the processor to perform steps of the power control parameter determining method according to any one of claims 1 to 25.

FIG. 1

FIG. 2

FIG. 3

FIG. 4

## INTERNATIONAL SEARCH REPORT

| | International application No. |
|---|---|
| | **PCT/CN2022/120575** |

**A. CLASSIFICATION OF SUBJECT MATTER**

H04W 72/02(2009.01)i

According to International Patent Classification (IPC) or to both national classification and IPC

**B. FIELDS SEARCHED**

Minimum documentation searched (classification system followed by classification symbols)

H04W; H04L; H04Q

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; 3GPP; CJFD; IEEE; CNKI; WOTXT: 单播, 组播, PTM, PTP, 物理上行控制信道, PUCCH, 功率控制参数, 下行控制信息, DCI, 下行分配索引, DAI, 传输块, 半持续, 调度, 参数, HARQ-ACK, 码本, 漏检, unicast, multicast, physical uplink control channel, power control parameters, downlink control information, downlink assignment index, transport block, semi-persistent, scheduling, parameters, codebook, misdetection

**C. DOCUMENTS CONSIDERED TO BE RELEVANT**

| Category* | Citation of document, with indication, where appropriate, of the relevant passages | Relevant to claim No. |
|---|---|---|
| X | FUTUREWEI. "3GPP TSG RAN WG1#104b-e R1-2102783"<br>*Discussion on improving reliability for RRC_CONNECTED UEs*, 20 April 2021 (2021-04-20),<br><br>section 2 | 1-3, 8-11, 14, 15, 18-20, 23-28, 33-36, 39, 40, 43-45, 48-53, 58-61, 64, 65, 68-70, 73-76 |
| A | CN 111294940 A (SPREADTRUM COMMUNICATIONS SHANGHAI INC.) 16 June 2020 (2020-06-16)<br>entire document | 1-76 |
| A | US 2021144691 A1 (QUALCOMM INC.) 13 May 2021 (2021-05-13)<br>entire document | 1-76 |
| A | EP 4055927 A1 (FG INNOVATION CO., LTD.) 14 September 2022 (2022-09-14)<br>entire document | 1-76 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 November 2022** | **09 November 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

<table>
<tr><td colspan="2" rowspan="2">International application No.<br><br>**PCT/CN2022/120575**</td></tr>
<tr></tr>
</table>

| Patent document cited in search report | | | Publication date (day/month/year) | Patent family member(s) | | | Publication date (day/month/year) |
|---|---|---|---|---|---|---|---|
| CN | 111294940 | A | 16 June 2020 | None | | | |
| US | 2021144691 | A1 | 13 May 2021 | WO | 2021096582 | A1 | 20 May 2021 |
| EP | 4055927 | A1 | 14 September 2022 | WO | 2021139747 | A1 | 15 July 2021 |
| | | | | KR | 20220123088 | A | 05 September 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111138643